# EUROPÄISCHE PATENTSCHRIFT

(11) **EP 1 193 027 B1**
(45) Veröffentlichungstag und Bekanntmachung des Hinweises auf die Patenterteilung: **25.07.2007**
(21) Anmeldenummer: 01122728.7
(22) Anmeldetag: 21.09.2001
(51) Int. Cl.: B23Q 39/04, B23Q 39/02, B23B 3/16, B23B 3/30

(54) **Drehmaschine**
Lathe
Tour

(30) Priorität: 29.09.2000 DE 10048291
(43) Veröffentlichungstag der Anmeldung: 03.04.2002
(73) Patentinhaber: Traub Drehmaschinen GmbH & Co. KG, 73262 Reichenbach (DE)
(72) Erfinder: Baumann, Ulrich, 73252 Lenningen (DE); Sonnek, Werner, 73669 Lichtenwald (DE)
(74) Vertreter: Hoeger, Stellrecht & Partner Patentanwälte

(56) Entgegenhaltungen:
- DE-A1- 19 904 860
- US-A- 5 127 140
- PATENT ABSTRACTS OF JAPAN Bd. 010, Nr. 261 (M-514), 5. September 1986 (1986-09-05) & JP 61 086103 A (CITIZEN WATCH CO LTD), 1. Mai 1986 (1986-05-01)

## Beschreibung

Die Erfindung betrifft eine nach dem Oberbegriff der Anspruchs 1, wie z.b. aus der US-A-5 127 140, bekannt.

Derartige Drehmaschinen sind als sogenannte Gegenspindelmaschinen aus dem Stand der Technik bekannt.

Das Problem derartiger Gegenspindelmaschinen besteht darin, daß dann, wenn eine möglichst große Zahl von Werkzeugen zur Bearbeitung zur Verfügung stehen soll, insbesondere eine möglichst große Zahl von Werkzeugen gleichzeitig zur Bearbeitung in Eingriff bringbar sein soll, diese Maschinen sehr groß bauen.

Der Erfindung liegt daher die Aufgabe zugrunde, eine Drehmaschine der gattungsgemäßen Art derart zu verbessern, daß diese möglichst kompakt aufgebaut ist.

Diese Aufgabe wird bei einer Drehmaschine der eingangs beschriebenen Art erfindungsgemäß durch die kennzeichnenden Merkmale des Anspruchs 1 gelöst.

Der Vorteil der erfindungsgemäßen Lösung ist darin zu sehen, daß mit der Verwendung eines derartigen Maschinenbettkörpers eine besonders raumsparende Art des Aufbaus der erfindungsgemäßen Drehmaschine entwickelt wurde.

Ferner hat ein derartiger Maschinenbettkörper den Vorteil, daß dieser bei einer derartigen Anordnung von Arbeitsspindel und Werkzeugschlitten sowie Werkzeugträger relativ zueinander bei der dem Maschinenbettkörper innewohnenden Wärmeausdehnung nur in geringem Maße einen negativen Einfluß auf die Genauigkeit der Drehbearbeitung aufweist, da die Wärmeausdehnung des Maschinenbettkörpers in den Querrichtungen, die für die Genauigkeit der Drehbearbeitung maßgeblich ist, gering ist, und die Ausdehnung des Maschinenbettkörpers in der Längsrichtung für die Genauigkeit der jeweiligen Drehbearbeitung unwesentlich ist.

Eine besonders günstige Lösung sieht dabei vor, daß die Trägerabschnitte im wesentlichen denselben Querschnitt aufweisen, so daß die Wärmeausdehnung in beiden Trägerabschnitten sich in gleichem Maße auswirkt und somit die relative Genauigkeit bei der Vor- und Rückseitenbearbeitung sehr hoch ist, da die Wärmeausdehnung sich in beiden Trägerabschnitten in gleicher Weise auf die Genauigkeit der Drehbearbeitung auswirkt.

Der Maschinenbettkörper könnte grundsätzlich in unterschiedlichster Art und Weise realisiert sein, beispielsweise besteht die Möglichkeit, den Maschinenbettkörper in spezieller Profilform, beispielsweise in Doppel-T-Profil oder in ähnlichen Profilformen, auszuführen. Eine besonders günstige Lösung sieht vor, daß sich der Maschinenbettkörper balkenähnlich in der Längsrichtung erstreckt, wobei insbesondere die balkenähnliche Form so zu verstehen ist, daß der Maschinenbettkörper ausgehend von einer balkenähnlichen Grundform ausgebildet ist.

Hinsichtlich der Unterteilung des Maschinenbettkörpers wurde bislang lediglich erwähnt, daß dieser zwei Trägerabschnitte aufweisen soll.

Grundsätzlich ist es möglich, den Maschinenbettkörper so auszubilden, daß die Trägerabschnitte ineinander übergehen.

Eine besonders günstige Lösung sieht jedoch vor, daß zwischen den Trägerabschnitten ein Verbindungsabschnitt vorgesehen ist.

Ein derartiger Verbindungsabschnitt kann bei der erfindungsgemäßen Lösung im wesentlichen dieselbe Querschnittsform wie die Trägerabschnitte aufweisen.

Es ist aber beim Vorsehen eines derartigen Verbindungsabschnitts auch möglich, daß dieser eine von den Trägerabschnitten abweichende Querschnittsform aufweist.

Selbst beim Vorsehen eines Verbindungsabschnitts bildet jedoch der Maschinenbettkörper mit den Trägerabschnitten und dem Verbindungsabschnitt vorzugsweise ein einstückiges Teil.

Hinsichtlich der Bewegbarkeit der Arbeitsspindeln wurden bislang im Zusammenhang mit der Erläuterung der einzelnen Ausführungsbeispiele keine näheren Angaben gemacht. So sieht ein vorteilhaftes Ausführungsbeispiel vor, daß mindestens einer der Trägerabschnitte an seiner Spindelträgerseite in einer Spindelführungsebene liegende Führungen für eine in Z-Richtung parallel zur Spindelachse verfahrbare Arbeitsspindel aufweist, so daß mindestens eine der Arbeitsspindeln in Z-Richtung bewegbar ist.

Vorzugsweise liegen dabei die Führungen in einer parallel zur Längsrichtung verlaufenden Spindelführungsebene.

Prinzipiell wäre es denkbar, die Werkzeugschlitten fest an den jeweiligen Schlittenträgerseiten des Maschinenbettkörpers zu montieren.

Da jedoch ohnehin eine Bewegbarkeit der Werkzeuge relativ zur Arbeitsspindel erforderlich ist, ist vorzugsweise vorgesehen, daß mindestens einer der Werkzeugschlitten mit in einer Schlittenführungsebene liegenden Schlittenführungen an dem Maschinenbettkörper bewegbar geführt ist.

Vorzugsweise erstrecken sich dabei die Schlittenführungen in parallel zur Längsrichtung verlaufenden Schlittenführungsebenen.

Hinsichtlich der Anordnung der Schlittenträgerseiten relativ zu der Spindelführungsebene ist es aus räumlichen Gründen, insbesondere für eine raumsparende Unterbringung der Werkzeugschlitten, besonders vorteilhaft, wenn die Schlittenträgerseiten des Maschinenbettkörpers auf derselben Seite der Spindelführungsebene liegen.

Eine besonders günstige Geometrie liegt dann vor, wenn die Schlittenführungsebene quer zur Spindelführungsebene verläuft. Noch günstiger ist es, wenn die einander gegenüberliegenden Schlittenführungsebenen quer zur Spindelführungsebene verlaufen.

Ein derartiger Verlauf der Schlittenführungsebene quer zur Spindelführungsebene schließt alle Winkel zwischen diesen Ebenen ein, die größer als 0° sind. Vorzugsweise verlaufen die Schlittenführungsebenen mindestens in einem Winkel von 45° zu der Spindelführungsebene.

Noch besser ist es, wenn der Winkel zwischen den Schlittenführungsebenen und der Spindelführungsebene sich einem rechten Winkel annähert. Eine besonders zweckmäßige Lösung sieht dabei vor, daß die Schlittenführungsebenen ungefähr senkrecht zur Spindelführungsebene verlaufen.

Um eine möglichst raumsparende Bauweise der erfindungsgemäßen Drehmaschine zu erhalten, ist es besonders günstig, wenn für die Bearbeitung des jeweiligen Werkstücks der entsprechende Werkzeugschlitten und die entsprechende Arbeitsspindel auf derselben Seite des jeweils zu diesem Werkstück in Arbeitsstellung stehenden Werkzeugs angeordnet sind.

Die kompakte Bauweise wird ferner noch dadurch begünstigt, wenn sämtliche für die Bearbeitung des in einer der Werkstückaufnahmen gehaltenen Werkstücks einsetzbaren Werkzeugschlitten in Längsrichtung des Maschinenbettkörpers gesehen im wesentlichen auf derselben Seite der in Arbeitsstellung bringbaren und von diesen getragenen Werkzeugen angeordnet sind.

Ferner wird die kompakte Bauweise weiterhin dadurch begünstigt, wenn die dem jeweiligen Trägerabschnitt zugeordneten Werkzeugschlitten auf einer dem jeweils anderen Trägerabschnitt abgewandten Seite der von diesen getragenen Werkzeugen angeordnet sind.

Hinsichtlich der Zahl der Werkzeugschlitten wurden im Zusammenhang mit der bisherigen Erläuterung der einzelnen Ausführungsbeispiele keine näheren Angaben gemacht. So ist es prinzipiell ausreichend, jeder Arbeitsspindel einen Werkzeugschlitten zuzuordnen, um mit jeder der Arbeitsspindeln gleichzeitig und unabhängig voneinander ein Werkstück bearbeiten zu können.

Eine besonders günstige Lösung sieht jedoch vor, das an mindestens einem Trägerabschnitt zwei Werkzeugschlitten zugeordnet sind, welche die Möglichkeit eröffnen, an einer Arbeitsspindel mit zwei in Eingriff stehenden Werkzeugen zu bearbeiten.

Hinsichtlich der Anordnung der Werkzeugschlitten relativ zu dem jeweiligen Trägerabschnitt ist es besonders günstig, wenn die Werkzeugschlitten an mindestens einem der Trägerabschnitte spiegelsymmetrisch zu einer Spiegelebene ausgebildet sind. Diese Lösung hat den großen Vorteil, daß damit die Herstellung der Werkzeugschlitten sehr einfach ist, da aufgrund der Spiegelsymmetrie ein hoher Anteil von Gleichteilen oder lediglich spiegelverkehrt herzustellenden Teilen eingesetzt werden kann.

Noch vorteilhafter ist es aus Kostengründen, wenn ein Werkzeugschlitten des einen Trägerabschnitts mit einem Werkzeugschlitten des anderen Trägerabschnitts identisch ausgebildet ist, da damit die Zahl der Gleichteile noch mehr gesteigert und somit die Kosten noch mehr reduziert werden können.

Eine besonders kostengünstige Lösung hinsichtlich des Aufbaus der Werkzeugschlitten sieht vor, daß bei jeweils zwei jeder Arbeitsspindel zugeordneten Werkzeugschlitten zwei Werkzeugschlitten identisch ausgebildet sind und die anderen beiden Werkzeugschlitten untereinander ebenfalls identisch, jedoch spiegelsymmetrisch zu den anderen Werkzeugschlitten ausgebildet sind, so daß die optimale Zahl von Gleichteilen oder lediglich durch Spiegelsymmetrie unterschiedlichen Teilen erreichbar ist und somit eine hohe Kostenreduktion bei der Herstellung der erfindungsgemäßen Werkzeugmaschine eintritt.

Besonders günstig ist es, wenn die miteinander identisch ausgebildeten Werkzeugschlitten an unterschiedlichen Schlittenträgerseiten des Maschinenbettkörpers angeordnet sind, um auch die Vorteile der Ausrichtung der Werkzeugschlitten relativ zu den Werkzeugen hinsichtlich eines kompakten Aufbaus der erfindungsgemäßen Drehmaschine ausnutzen zu können.

Hinsichtlich der Bewegbarkeit der Werkzeugschlitten wurden im Zusammenhang mit der bisherigen Erläuterung der einzelnen Ausführungsbeispiele keine näheren Angaben gemacht. So sieht ein vorteilhaftes Ausführungsbeispiel vor, daß mindestens einer der zwei einer der Arbeitsspindeln zugeordneten Werkzeugschlitten einen in Z-Richtung bewegbaren Schlittenkörper aufweist. Diese Lösung hat den Vorteil, daß damit die Möglichkeiten einer Bearbeitung mit zwei gleichzeitig an einem Werkstück in Eingriff stehenden Werkzeugen noch verbessert werden, da beispielsweise bei einer für die Bearbeitung mit einem Werkzeug erforderlichen relativen Bewegung in Z-Richtung zwischen Werkzeug und Arbeitsspindel noch zusätzlich eine zweite Bewegbarkeit in Z-Richtung durch den in Z-Richtung bewegbaren Schlittenkörper des anderen Werkzeugschlittens gegeben ist, so daß beide Werkzeuge mit unterschiedlichen Relativbewegungen in Z-Richtung einsetzbar sind.

Hinsichtlich der Anordnung der Schlittenführungen in Längsrichtung des Maschinenbettkörpers sind die unterschiedlichsten Möglichkeiten denkbar. Eine besonders günstige Lösung sieht vor, daß an den Schlittenträgerseiten die Schlittenführungen für den mindestens einen Werkzeugschlitten jeweils im Bereich der Trägerabschnitte vorgesehen sind.

Besonders günstig ist es, wenn die Schlittenführungen außerhalb eines Längsabschnitts des Maschinenbettkörpers angeordnet sind, in welchem ein Arbeitsraum liegt, in welchem eine Bearbeitung der in den beiden Arbeitsspindeln gehaltenen Werkstücke erfolgt.

Hinsichtlich der Bewegung der Werkzeugschlitten relativ zum Maschinenbettkörper im Bereich der Schlittenträgerseiten wurden im Zusammenhang mit der bisherigen Erläuterung der einzelnen Ausführungsbeispiele keine näheren Angaben gemacht. So sieht ein vorteilhaftes Ausführungsbeispiel vor, daß die Werkzeugschlitten an den Schlittenträgerseiten des Maschinenbettkörpers in Z-Richtung bewegbar geführt sind.

Diese Lösung hat den großen Vorteil, daß insbesondere dann, wenn große Bewegungen in Z-Richtung erfolgen sollen, eine sehr stabile Führung der Werkzeugschlitten relativ zum Maschinenbettkörper realisiert werden kann.

Besonders günstig läßt sich dies dadurch realisieren, daß an mindestens einer Schlittenträgerseite Z-Führungen für die bewegbare Führung des jeweiligen Werkzeugschlittens vorgesehen sind.

Da meistens an beiden Trägerabschnitten Z-Führungen vorzusehen sind, sind vorzugsweise die Z-Führungen so angeordnet, daß die Z-Führungen der einen Schlittenträgerseite eines Trägerabschnitts mit Z-Führungen derselben Schlittenträgerseite des anderen Trägerabschnitts fluchten.

Besonders günstig ist es, wenn die Z-Führungen der Schlittenträgerseiten beider Trägerabschnitte ineinander übergehen, so daß prinzipiell die Möglichkeit besteht, die Werkzeugschlitten vom einen Trägerabschnitt zum anderen fahren zu lassen.

Beispielsweise wäre es dabei möglich, einen Werkzeugschlitten sowohl einer Arbeitsspindel als auch der anderen Arbeitsspindel für die Bearbeitung des Werkstücks zuzuordnen, so daß sich die Flexibilität beim Einsatz einer derartigen Drehmaschine für unterschiedlich geartete Werkstücke steigern läßt.

Selbst bei Vorsehen eines Verbindungsabschnitts zwischen den Trägerabschnitten sieht ein vorteilhaftes Ausführungsbeispiel vor, daß die Z-Führungen sich über den Verbindungsabschnitt hinweg erstrecken und somit von dem einen Trägerabschnitt zum anderen Trägerabschnitt durchgehend verlaufen.

Alternativ zu der Lösung, bei welcher die Bewegbarkeit in Z-Richtung zwischen dem Maschinenbettkörper und dem an diesem gehaltenen Werkzeugschlitten stattfindet, sieht eine andere Lösung vor, daß mindestens einer der Werkzeugschlitten einen Y-Schlittenkörper umfaßt, welcher an der Schlittenträgerseite des Maschinenbettkörpers in Y-Richtung bewegbar geführt ist.

Diese Lösung hat den Vorteil, daß mit dieser die Y-Achse, welche die am wenigsten dynamisch eingesetzte Achse ist, möglichst nahe an dem Maschinenbettkörper sitzt und die X-Achse und gegebenenfalls noch eine Z-Achse, die mit möglichst hoher Dynamik betreibbar sein sollen, in den Werkzeugschlitten integriert sind, und dabei die Achsen, die mit großer Dynamik betrieben werden sollen, möglichst geringe Massen und somit eine möglichst geringe Massenträgheit aufweisen.

Vorzugsweise ist dabei vorgesehen, daß an mindestens einer Schlittenträgerseite Y-Führungen für die bewegbare Führung des jeweiligen Werkzeugschlittens vorgesehen sind.

Besonders günstig ist es bei dieser Ausbildung des Werkzeugschlittens, daß mindestens einer der Werkzeugschlitten einen Z-Schlittenkörper umfaßt, welcher gegenüber dem an der Schlittenträgerseite geführten Y-Schlittenkörper in Z-Richtung bewegbar ist, so daß sich auch noch eine Bewegung in Z-Richtung realisieren läßt, diese Bewegbarkeit jedoch vom Werkzeugschlitten selbst realisiert wird, so daß durch die mit möglichst hoher Dynamik betreibbare Z-Achse lediglich noch geringe Massen zu bewegen sind.

Um in der für eine Drehbearbeitung hauptsächlich eingesetzten X-Achse ebenfalls möglichst wenig bewegte Massen zu haben, ist vorzugsweise vorgesehen, daß jeder Werkzeugschlitten einen X-Schlittenkörper umfaßt, welcher gegenüber einem an der Schlittenträgerseite geführten Schlittenkörper in X-Richtung bewegbar geführt ist.

Im Zusammenhang mit der bisherigen Erläuterung der einzelnen Ausführungsbeispiele wurde lediglich darauf eingegangen, wie ein möglichst raumsparender Aufbau der Drehmaschine durch günstige Anordnung der Werkzeugschlitten erreichbar ist.

Um diese Vorgehensweise konsequent fortzusetzen ist vorteilhafterweise vorgesehen, daß für die Bearbeitung des jeweiligen Werkstücks der entsprechende Werkzeugträger und die entsprechende Werkstückaufnahme in Längsrichtung des Maschinenbettkörpers gesehen im wesentlichen auf derselben Seite des jeweils zu diesem Werkstück in Arbeitsstellung stehenden Werkzeugs angeordnet sind.

Ferner ist es für eine kompakte Bauweise günstig, wenn sämtliche für die Bearbeitung des in einer der Werkstückaufnahmen gehaltenen Werkstücks einsetzbaren Werkzeugträger in Längsrichtung des Maschinenbettkörpers gesehen im wesentlichen auf derselben Seite der in Arbeitsstellung bringbaren Werkzeuge angeordnet sind.

Ferner läßt sich vorteilhafterweise die Kompaktheit des Aufbaus auch dadurch erreichen, daß die dem jeweiligen Trägerabschnitt zugeordneten Werkzeugträger sich im wesentlichen in Richtung einer dem jeweils anderen Trägerabschnitt abgewandten Seite der jeweils von diesem getragenen Werkzeuge erstrecken.

Hinsichtlich der Zahl der Werkzeugträger ist es dann, wenn eine möglichst große Zahl von Werkzeugen am Werkstück in Eingriff stehen soll, günstig, wenn mindestens einer der Arbeitsspindeln zwei Werkzeugträger zugeordnet sind.

Um eine möglichste hohe Zahl an Gleichteilen zu erhalten, sind die Werkzeugträger vorzugsweise so ausgebildet, daß diese an mindestens einem der Trägerabschnitte spiegelsymmetrisch zu einer Spiegelebene aufgebaut sind.

Bereits ein derartiger spiegelsymmetrischer Aufbau der Werkzeugträger läßt, insbesondere bei den Drehteilen die Verwendung einer hohen Anzahl von Gleichteilen zu und auch die spiegelsymmetrisch auszubildenden Teile sind produktionstechnisch einfach und kostengünstig herstellbar.

Besonders hoch läßt sich die Zahl der Gleichteile dann halten, wenn ein Werkzeugträger eines Trägerabschnittes mit dem Werkzeugträger des anderen Trägerabschnitts identisch ausgebildet ist, da damit die identischen Teile für die beiden Werkzeugträger Verwendung finden und somit eine erhebliche Kostenreduktion möglich ist.

Um die Vorteile eines kostengünstigen Aufbaus mit einem möglichst raumsparenden Aufbau zu kombinieren ist vorzugsweise vorgesehen, daß die miteinander identisch ausgebildeten Werkzeugträger an unterschiedlichen Schlittenträgerseiten des Maschinenbettkörpers angeordnet sind.

Eine besonders günstige Lösung sieht, insbesondere im Fall einer Drehmaschine mit zwei Arbeitsspindeln und jeweils zwei jeder Arbeitsspindel zugeordneter Werkzeugträger, vor, daß insgesamt zwei Werkzeugträger identisch ausgebildet sind und die anderen beiden Werkzeugträger spiegelsymmetrisch zu diesen, so daß die Zahl der Gleichteile maximiert ist.

Hinsichtlich der Ausbildung der Werkzeugträger selbst wurden bislang keine näheren Angaben gemacht.

So ist es beispielsweise denkbar, einen Werkzeugträger vorzusehen, der ein einzelnes Werkzeug trägt.

Besonders günstig ist es, um die Zahl der einsetzbaren Werkzeuge möglichst groß zu halten, wenn die Werkzeugträger als Mehrfachwerkzeugträger ausgebildet sind.

Ein derartiger Mehrfachwerkzeugträger könnte beispielsweise ein Linearwerkzeugträger sein.

Eine andere Lösung sieht vor, als Mehrfachwerkzeugträger einen zusätzlich um eine Achse schwenkbaren doppelten Linearwerkzeugträger vorzusehen.

Eine besonders günstige Lösung sieht jedoch vor, daß mindestens einer der Werkzeugträger als Werkzeugrevolver ausgebildet ist.

Eine derartige Ausbildung eines Werkzeugrevolvers schafft die Möglichkeit, eine hohe Zahl von Werkzeugen für den Einsatz zur Verfügung zu stellen.

Um einen derartigen Werkzeugrevolver hinsichtlich seiner radialen Ausdehnung möglichst gering zu halten und somit ein Revolvergehäuse bei der Bearbeitung des Werkstücks möglichst nahe der Spindel positionieren zu können, ist vorzugsweise vorgesehen, daß der Revolver eine in einem Winkel von weniger als 45° zur jeweiligen Spindelachse verlaufende Revolverachse aufweist.

Eine Möglichkeit der Realisierung wäre die, daß die Revolverachse im wesentlichen parallel zur Spindelachse verläuft.

Diese Lösung macht es jedoch erforderlich, insbesondere bei angetriebenen Werkzeugen, den Antrieb für die Werkzeuge und den Antrieb für das Schalten des Revolvers aus räumlichen Gründen zu trennen, wenn der Durchmesser des Revolverkopfes möglichst klein gehalten werden soll und somit die Revolverachse bei der Bearbeitung des Werkstücks möglichst nahe der Arbeitsspindel positioniert werden soll.

Eine besonders günstige Lösung sieht dabei vor, daß die Revolverachse in einem Winkelbereich von ungefähr 10° bis ungefähr 30° zur jeweiligen Spindelachse verläuft, so daß aufgrund des schrägen Verlaufs der Revolverachse zur Spindelachse die Möglichkeit besteht, den Antrieb für angetriebene Werkzeuge und für das Schalten des Revolvers koaxial zur Revolverachse vorzusehen.

Prinzipiell ist es im Rahmen der erfindungsgemäßen Lösung denkbar, auf den Werkzeugschlitten lediglich Werkzeugträger anzuordnen.

Es ist aber auch denkbar, auf den Werkzeugschlitten Hilfseinrichtungen, die ebenfalls im Rahmen der vorliegenden Erfindung als Werkzeuge im weitesten Sinne betrachtet werden, vorzusehen.

Eine vorteilhafte Ausführungsform einer erfindungsgemäßen Drehmaschine sieht daher vor, daß einer der Werkzeugschlitten einen Elemententräger für am Werkstück einsetzbare Elemente trägt, welcher die Möglichkeit schafft, zusätzlich auf eines der Werkstücke bei der Bearbeitung einzuwirken.

Als Elemente des Elemententrägers sind die unterschiedlichsten Möglichkeiten denkbar. Beispielsweise können Elemente des Elemententrägers Werkstückspannelemente oder Werkstückhalteelemente sein.

Ein besonders vorteilhaftes Ausführungsbeispiel sieht vor, daß der Elemententräger ein Werkstückstützelement als Element trägt, mit welchem beispielsweise eine zusätzliche Abstützung des jeweiligen Werkstücks bei der Bearbeitung möglich ist, um entweder präziser bearbeiten zu können, oder mit höheren Schnittkräften arbeiten zu können.

Im einfachsten Fall ist dabei das Werkstückstützelement eine Spitze zur Abstützung des Werkstücks, es ist aber auch denkbar, anstatt der Spitze jegliche Art von Werkstückaufnahme zur Abstützung des Werkstücks vorzusehen.

Alternativ oder ergänzend zum Vorsehen eines Werkstückstützelements ist vorzugsweise vorgesehen, daß der Elemententräger ein Werkzeug als Element trägt, so daß beispielsweise zusätzliche Bearbeitungen möglich sind.

Eine vorteilhafte Ausführungsform sieht vor, daß der Elemententräger sowohl Werkstückspannelemente und/oder Werkstückführungselemente und/oder Werkstückstützelemente als auch Werkzeuge aufweist, und daß durch geeignete Bewegung des Elemententrägers relativ zum Werkstück unterschiedliche Elemente am Werkstück in Einsatz bringbar sind.

Dabei sind unterschiedlichste Lösungen denkbar, um die Elemente in geeigneter Weise anzuordnen.

Besonders günstig ist es, wenn die Elemente mit ihrer Mittelachse in einer Ebene, vorzugsweise im Abstand voneinander liegen, so daß durch Anordnen der Ebene, so daß diese durch die jeweilige Spindelachse des Werkstücks hindurchverläuft, die unterschiedlichsten Elemente in Einsatz bringbar sind.

Eine aus Kollisionsgründen besonders günstige Lösung sieht vor, daß die Ebene parallel zur Y-Achse verläuft, so daß durch Verschieben des Elemententrägers in Richtung der Y-Achse die unterschiedlichsten Elemente, das heißt Werkstückspannelemente oder Werkstückführungselemente oder Werkstückstützelemente oder Werkzeuge so positionierbar sind, daß mit einem von diesen eine Einwirkung auf das Werkstück realisierbar ist.

Besonders günstig ist es, wenn der Elemententräger Aufnahmen für das in der ersten Werkstückaufnahme und der zweiten Werkstückaufnahme aufgenommene Werkstück aufweist und somit die beiden Werkstücke gleichzeitig durch den Elemententräger abgestützt werden können.

Um mit der erfindungsgemäßen Werkzeugmaschine ein Werkstück auf beiden Seiten möglichst effizient bearbeiten zu können, ist vorteilhafterweise vorgesehen, daß mindestens eine der Arbeitsspindeln in Z-Richtung so weit in Richtung der anderen Arbeitsspindel verschiebbar ist, daß eine Übergabe des Werkstücks von einer Werkstückaufnahme zur anderen Werkstückaufnahme durchführbar ist.

Hinsichtlich der Anordnung der Führungen für die in Z-Richtung verschiebbare Arbeitsspindel ist vorzugsweise vorgesehen, daß diese jeweils im Bereich der Trägerabschnitte angeordnet sind und trotzdem die Arbeitsspindel bis zur anderen Arbeitsspindel zur Übernahme des Werkstücks bewegbar ist.

Besonders günstig ist es dabei, wenn die Führungen außerhalb eines Längsabschnittes des Maschinenbettkörpers angeordnet sind, in welchem ein Arbeitsraum liegt, so daß die Notwendigkeit entfällt, diese Führungen durch den Arbeitsraum hindurchzuführen.

Im Zusammenhang mit der bisherigen Erläuterung der einzelnen Ausführungsbeispiele wurde nicht näher auf die Art der Bearbeitung der Werkstücke eingegangen.

Es wurde lediglich eine übliche Bearbeitung eines Werkstücks, das in einer Werkstückaufnahme der Arbeitsspindel gehalten ist, vorausgesetzt.

Die erfindungsgemäße Lösung läßt sich jedoch besonders vorteilhaft auch dann einsetzen, wenn einer der Arbeitsspindeln eine Führungseinrichtung zum Langdrehen zugeordnet ist, so daß die erfindungsgemäße Drehmaschine als spezielle Langdrehmaschine arbeiten kann.

Vorzugsweise ist dabei die Arbeitsspindel relativ zur Führungseinrichtung in Z-Richtung bewegbar, um das Werkstück durch die Führungseinrichtung hindurchzuführen, wobei jeweils nahe der Führungseinrichtung eine Bearbeitung mittels der von den Werkzeugträgern gehaltenen Werkzeuge erfolgt.

Besonders günstig ist es dabei, wenn die Arbeitsspindel auf auf der Spindelträgerseite des Trägerabschnitts angeordneten Z-Führungen geführt ist.

Prinzipiell wäre es denkbar, auch die Führungseinrichtung in Z-Richtung bewegbar zu gestalten. Aus Gründen der Einfachheit des Aufbaus und der Präzision der Bearbeitung ist es jedoch günstig, wenn die Führungseinrichtung stationär an dem Trägerabschnitt gehalten ist.

Hinsichtlich der Bewegbarkeit der anderen gegenüberliegenden Arbeitsspindel sind dabei noch keine besonderen Angaben gemacht. Um jedoch ebenfalls eine Übergabe des Werkstücks zur Bearbeitung auf der zweiten Seite vorsehen zu können, ist vorzugsweise die gegenüberliegende Arbeitsspindel in Z-Richtung relativ zum Trägerabschnitt bewegbar und insbesondere soweit verschiebbar, daß deren Werkstückaufnahme die Führungseinrichtung erreicht.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines Maschinengestells mit Maschinenbettkörper und einer Spindel eines ersten Ausführungsbeispiels einer erfindungsgemäßen Drehmaschine;
- Fig. 2: eine perspektivische Ansicht ähnlich Fig. 1 des ersten Ausführungsbeispiels mit zwei der Arbeitsspindel zugeordneten Werkzeugschlitten mit Werkzeugträgern;
- Fig. 3: eine Ansicht in Richtung des Pfeils A in Fig. 2;
- Fig. 4: eine Draufsicht von oben auf das erste Ausführungsbeispiel der erfindungsgemäßen Drehmaschine mit zwei Spindeln und zwei jeder Spindel zugeordneten Werkzeugschlitten und Werkzeugträgern;
- Fig. 5: eine Draufsicht in Richtung des Pfeils B in Fig. 4;
- Fig. 6: einen Schnitt längs Linie 6-6 in Fig. 3;
- Fig. 7: eine perspektivische Gesamtansicht eines zweiten Ausführungsbeispiels einer erfindungsgemäßen Drehmaschine, bei welchem im Gegensatz zum ersten Ausführungsbeispiel ein Werkzeugträger durch einen Reitstock ersetzt ist;
- Fig. 8: eine Draufsicht ähnlich Fig. 4 auf das zweite Ausführungsbeispiel gemäß Fig. 7;
- Fig. 9: eine perspektivische Ansicht des Werkzeugschlittens mit dem auf diesem angeordneten Reitstock des zweiten Ausführungsbeispiels;
- Fig. 10: eine Draufsicht ähnlich Fig. 4 auf ein drittes Ausführungsbeispiel einer erfindungsgemäßen Drehmaschine, bei welcher Revolver mit parallel zu Spindelachsen verlaufenden Revolverachsen eingesetzt sind;
- Fig. 11: einen Schnitt ähnlich Fig. 6 durch das dritte Ausführungsbeispiel gemäß Fig. 10;
- Fig. 12: eine perspektivische Gesamtansicht eines vierten Ausführungsbeispiels einer erfindungsgemäßen Drehmaschine, bei welchem im Gegensatz zum dritten Ausführungsbeispiel ein Werkzeugträger durch einen Reitstock ersetzt ist;
- Fig. 13: eine Draufsicht auf das vierte Ausführungsbeispiel der erfindungsgemäßen Drehmaschine;
- Fig. 14: eine perspektivische Gesamtansicht eines fünften Ausführungsbeispiels einer erfindungsgemäßen Drehmaschine;
- Fig. 15: eine perspektivische Ansicht des Maschinenbettkörpers mit einer Arbeitsspindel eines sechsten Ausführungsbeispiels einer erfindungsgemäßen Drehmaschine;
- Fig. 16: eine perspektivische Darstellung des Maschinenbettkörpers mit zwei Arbeitsspindeln des sechsten Ausführungsbeispiels;
- Fig. 17: eine perspektivische Gesamtdarstellung des sechsten Ausführungsbeispiels der erfindungsgemäßen Drehmaschine;
- Fig. 18: eine Draufsicht in Richtung des Pfeils C in Fig. 17;
- Fig. 19: eine Draufsicht in Richtung des Pfeils D in Fig. 17;
- Fig. 20: eine perspektivische Gesamtansicht eines siebten Ausführungsbeispiels einer erfindungsgemäßen Drehmaschine;
- Fig. 21: eine Draufsicht in Richtung des Pfeils E in Fig. 20 und
- Fig. 22: eine schematische Darstellung eines achten Ausführungsbeispiels einer erfindungsgemäßen Drehmaschine, bei welcher im Gegensatz zum siebten Ausführungsbeispiel zwei Werkzeugträger als Linearwerkzeugträger ausgebildet sind.

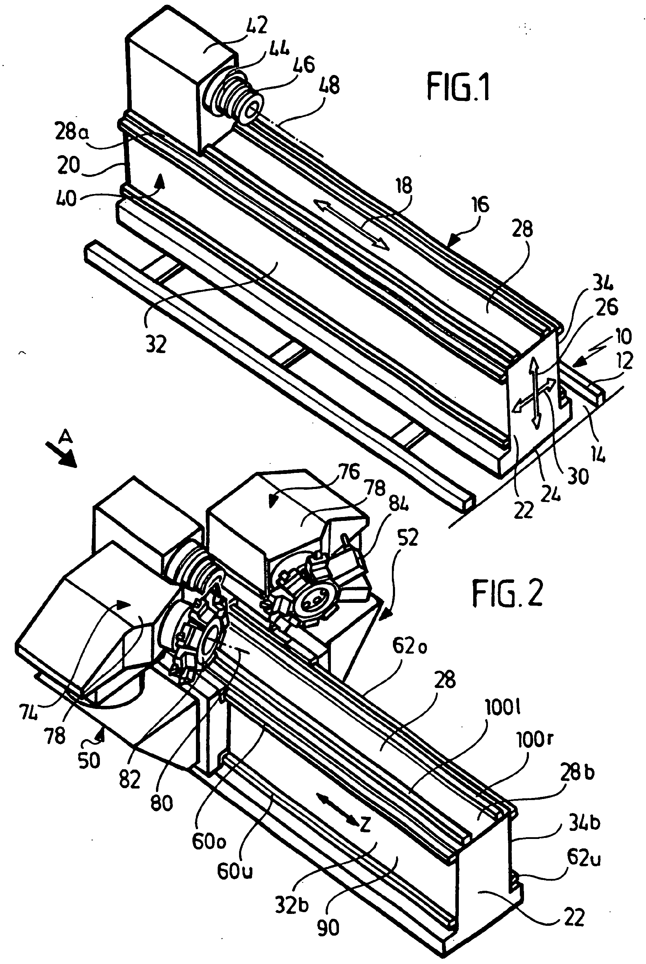

Ein erstes Ausführungsbeispiel einer erfindungsgemäßen Drehmaschine, dargestellt in Fig. 1, umfaßt ein als Ganzes mit 10 bezeichnetes Maschinengestell, mit einem Grundrahmen 12, welcher auf einer Stellfläche 14 für das Maschinengestell aufsetzbar ist, und mit einem vom Grundrahmen 12 getragenen Maschinenbettkörper 16.

Der Maschinenbettkörper 16 ist dabei balkenähnlich in einer Längsrichtung 18 langgestreckt ausgebildet und verläuft von einem ersten Ende 20 bis zu einem zweiten Ende 22 mit im wesentlichen konstantem Querschnitt.

Der Maschinenbettkörper 16 kann relativ zum Grundrahmen 12 beliebig angeordnet sein, beispielsweise mit der Längsrichtung 18 quer oder senkrecht zur Stellfläche 14 verlaufend oder auch ungefähr parallel zur Stellfläche 14 verlaufend, wobei im letztgenannten Fall der Maschinenbettkörper 16 am Grundrahmen 12 hängend oder auf diesem stehend angeordnet sein kann.

Der Maschinenbettkörper 16 weist seinerseits eine Basisseite 24 auf, mit welcher der Maschinenbettkörper 16 beispielsweise auf dem Grundrahmen 12 aufgesetzt und an diesen fixiert ist, und eine in einer ersten Querrichtung 26 zur Längsrichtung 18 gegenüberliegende Spindelträgerseite 28. Ferner weist der Maschinenbettkörper 16 zwei in einer zweiten Querrichtung 30 einander gegenüberliegende Schlittenträgerseiten 32 und 34 auf, wobei die zweite Querrichtung 30 zur Längsrichtung 18 vorzugsweise senkrecht zur ersten Querrichtung 26 verläuft.

Bei dem dargestellten ersten Ausführungsbeispiel verläuft die erste Querrichtung 26 ungefähr senkrecht zur Stellfläche 14, es ist aber auch möglich, die erste Querrichtung 26 schräg oder parallel zur Stellfläche 14 verlaufend anzuordnen.

Der Maschinenbettkörper 16 umfaßt außerdem einen ersten Trägerabschnitt 40, welcher sich ausgehend von dem ersten Ende 20 in Richtung des zweiten Endes 22 erstreckt.

Der erste Trägerabschnitt 40 trägt auf seiner Spindelträgerseite 28a ein Spindelgehäuse 42 einer ersten Arbeitsspindel 44, welche mit einer ersten Werkstückaufnahme 46 versehen und um eine erste Spindelachse 48 drehbar ist.

Vorzugsweise ist dabei das Spindelgehäuse 42 stationär auf der Spindelträgerseite 28a des ersten Trägerabschnitts 40 angeordnet.

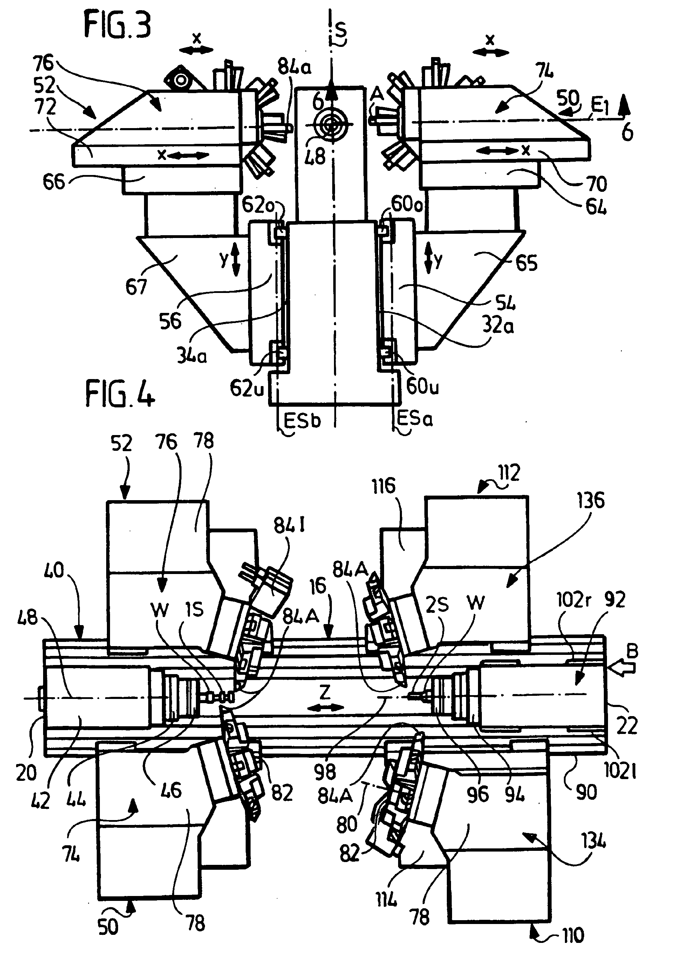

An dem ersten Trägerabschnitt 40 ist ferner, wie in Fig. 2 und 3 dargestellt, im Bereich der Schlittenträgerseiten 32a und 34a jeweils ein Werkzeugschlitten 50 und 52 vorgesehen, wobei beide Werkzeugschlitten 50 und 52 einen den Schlittenträgerseiten 32a und 34a des ersten Trägerabschnitts 40 zugewandten Z-Schlittenkörper 54 bzw. 56 aufweisen, der an im wesentlichen parallel zur Längsrichtung 18 verlaufenden Z-Führungen 60o und 60u bzw. 62o und 62u geführt ist, die in der ersten Querrichtung 26 im Abstand voneinander an den Schlittenträgerseiten 32a und 34a angeordnet sind.

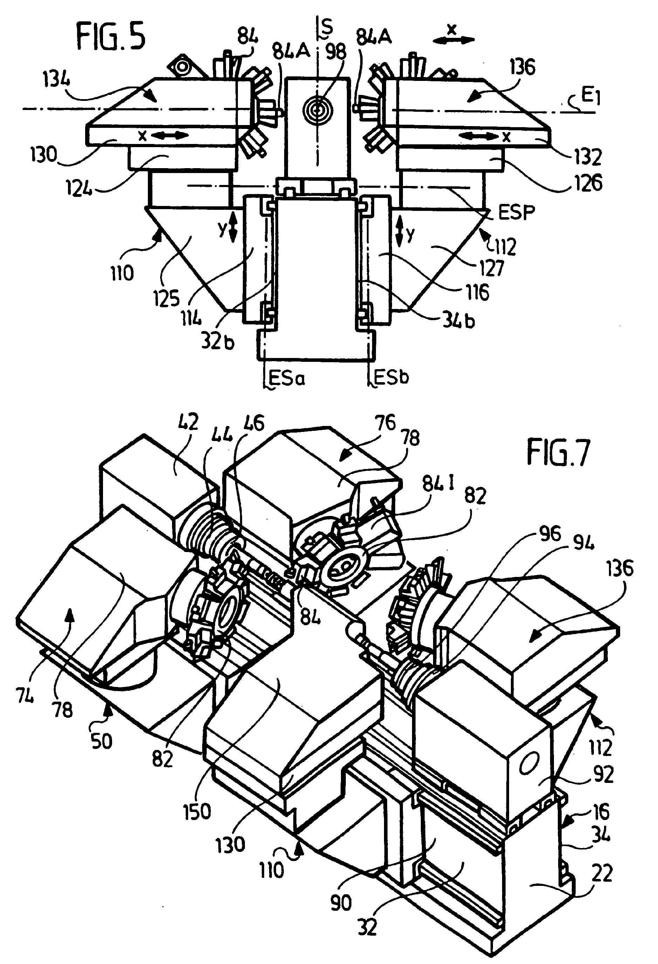

Durch die Z-Führungen 60o, 60u und 62o, 62u, werden jeweils Schlittenführungsebenen ESa bzw. ESb (Fig. 3, 5) aufgespannt, parallel zu welchen die Z-Schlittenkörper 54 bzw. 56 relativ zum Maschinenbettkörper 16 bewegbar sind.

Die Schlittenführungsebenen ESa, ESb verlaufen bei dem dargestellten ersten Ausführungsbeispiel parallel zueinander, können aber auch in beliebigen Winkeln zueinander verlaufen, wobei diese Winkel vorzugsweise kleiner als 120°, noch besser kleiner als 90° sind.

Generell verläuft bei einer erfindungsgemäßen Drehmaschine die Z-Richtung parallel zur Spindelachse 48 und vorzugsweise auch parallel zur Längsrichtung 18.

Mit den Z-Schlittenkörpern 54 und 56 sind X-Führungskörper 64 und 66 verbunden, auf welchen X-Schlittenkörper 70 und 72 angeordnet sind, die gegenüber den X-Führungskörpern 64 und 66 jeweils in einer X-Richtung senkrecht zur Spindelachse 48 bewegbar sind.

Die X-Schlittenkörper 70 und 72 tragen dabei ihrerseits als Ganzes mit 74 und 76 bezeichnete, vorzugsweise als Werkzeugrevolver ausgebildete Werkzeugträger, von denen jeder ein fest an dem jeweiligen X-Schlittenkörper 70 und 72 gehaltenes Revolvergehäuse 78 und einen gegenüber dem Revolvergehäuse 78 um eine Revolverachse 80 drehbaren Revolverkopf 82 aufweist, welcher eine Vielzahl von Werkzeugen 84 trägt, die dann, wenn sie in einer Arbeitsstellung A stehen, in einer durch die erste Spindelachse 48 hindurchverlaufenden Ebene E₁ liegen und in dieser Arbeitsstellung in X-Richtung relativ zur ersten Spindelachse 48 bewegbar sind, um ein in der ersten Werkstückaufnahme 46 gehaltenes Werkstück W zu bearbeiten, wie in Fig. 4 dargestellt.

Der Maschinenbettkörper 16 weist außerdem einen sich ausgehend vom zweiten Ende 22 in Richtung des ersten Endes 20 erstreckenden zweiten Trägerabschnitt 90 auf, dessen Spindelträgerseite 28b ein Spindelgehäuse 92 einer zweiten Arbeitsspindel 94 trägt, die ihrerseits mit einer zweiten Werkstückaufnahme 96 versehen und um eine zweite Spindelachse 98, die koaxial zur ersten Spindelachse 48 verläuft, drehbar ist.

Im Gegensatz zum ersten Spindelgehäuse 42 ist das zweite Spindelgehäuse 92 relativ zum zweiten Trägerabschnitt 90 in Z-Richtung verschiebbar und hierzu trägt die Spindelträgerseite 28b des zweiten Trägerabschnitts 90 zwei Z-Führungen 100l und 100r, welche in der zweiten Querrichtung 30 im Abstand voneinander angeordnet sind und von dem zweiten Trägerabschnitt 90 bis zur ersten Arbeitsspindel 44 verlaufen, so daß die zweite Arbeitsspindel 94 mit der zweiten Werkstückaufnahme 96 soweit in Richtung der ersten Arbeitsspindel 44 verfahrbar ist, daß mit der zweiten Werkstückaufnahme 96 das Werkstück W unmittelbar aus der ersten Werkstückaufnahme 46 übergeben werden kann.

Dabei erfolgt vorzugsweise die Führung des zweiten Spindelgehäuses 92 an den Z-Führungen 100l und 100r über an dem zweiten Spindelgehäuse 92 vorgesehene Führungskörper 102l, 102r, die ihrerseits an den Z-Führungen 1001 und 100r geführt sind.

Die Z-Führungen 100l und 100r spannen eine Spindelführungsebene ESP (Fig. 5) auf, die quer zu den Schlittenführungsebenen ESa, ESb verläuft, vorzugsweise in ungefähr demselben Winkel zu jeder der Schlittenführungsebenen ESa, ESb, und besonders günstig ungefähr im rechten Winkel zu den Schlittenführungsebenen ESa, ESb.

Ferner sind, wie in Fig. 4 dargestellt, an Schlittenträgerseiten 32b und 34b des zweiten Trägerabschnitts 90 ebenfalls Z-Führungen vorgesehen, wobei vorzugsweise die Z-Führungen 60o und 60u sowie 62o und 62u von den Schlittenträgerseiten 32a und 34a des ersten Trägerabschnitts 40 durchgehend in Längsrichtung 18 des Maschinenbettkörpers 16 und somit ebenfalls längs der Schlittenträgerseiten 32b und 34b des zweiten Trägerabschnitts 90 verlaufen, und zwar vorzugsweise vom ersten Ende 20 bis zum zweiten Ende 22 des Maschinenbettkörpers 16.

Im Bereich des zweiten Trägerabschnitts 90 sind nun an den Z-Führungen 60o und 60u bzw. 62o und 62u Werkzeugschlitten 110 und 112 vorgesehen, welche mit Z-Schlittenkörpern 114 und 116 an den Z-Führungen 60o und 60u bzw. 62o und 62u geführt sind und außerdem, wie in Fig. 5 dargestellt, X-Führungskörper 124 und 126 aufweisen, an welchen X-Schlittenkörper 130 und 132 in X-Richtung geführt sind, wobei die X-Richtung senkrecht zur zweiten Spindelachse 98 verläuft.

Somit sind im Bereich des zweiten Trägerabschnitts 90 die Schlittenführungsebenen ESa, ESb mit denen des ersten Trägerabschnitts 40 identisch.

Bei der bislang beschriebenen Grundversion des ersten Ausführungsbeispiels sind die X-Führungskörper 64, 66, 124, 126 fest mit den Z-Schlittenkörpern 54, 56, 114, 116 verbunden.

Bei einer weiter ausgebauten Version des ersten Ausführungsbeispiels ist vorgesehen, die X-Führungskörper 64, 66, 124, 126 an Y-Schlittenkörpern 65, 67, 125, 127 anzuordnen, die ihrerseits an den auch als Y-Führungskörper ausgebildeten Z-Schlittenkörpern 54, 56, 114, 116 in Y-Richtung bewegbar geführt sind.

Da die zweite Spindelachse 98 mit der ersten Spindelachse 48 fluchtet, liegt die zweite Spindelachse 98 ebenfalls in der Ebene E₁.

Ferner sind in gleicher Weise wie im Zusammenhang mit den Werkzeugschlitten 50 und 52 erläutert, auf den X-Schlittenkörpern 130 und 132 Werkzeugträger 134 und 136 vorgesehen, die vorzugsweise ebenfalls als Revolver ausgebildet sind und somit ebenfalls das Revolvergehäuse 78 und den um die Revolverachse 80 drehbaren Revolverkopf 82 aufweisen.

Dabei liegen, wie in Fig. 5 dargestellt, die an dem Revolverkopf 82 gehaltenen Werkzeuge 84, sofern sie in einer Arbeitsstellung A stehen, ebenfalls in der Ebene E₁.

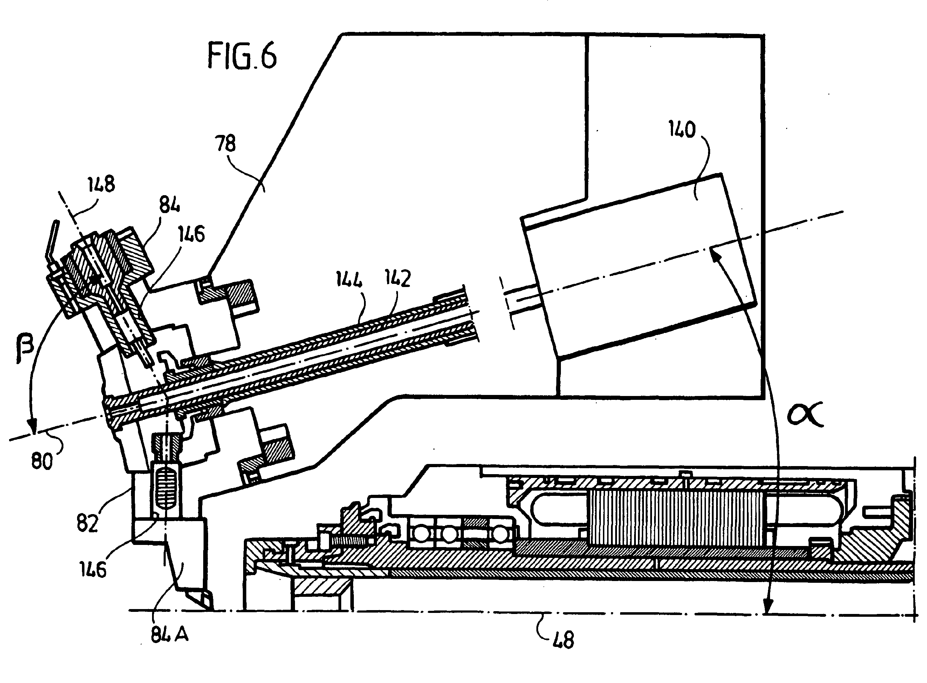

Bei einer bevorzugten Ausführungsform des ersten Ausführungsbeispiels ist jeweils die Revolverachse 80 zwar in der Ebene E₁ angeordnet, jedoch zur jeweiligen Spindelachse 48, 98, in Fig. 6 am Beispiel der ersten Spindelachse 48 dargestellt, in einem Winkel α, welcher bei ungefähr 15° liegt. Diese Lösung hat den Vorteil, daß der Revolverkopf 82 in dem Revolvergehäuse 78 möglichst nahe der Spindelachse 48 angeordnet werden kann, außerdem aber auch der Revolverkopf 82 mit einem Antrieb 140 antreibbar ist, der koaxial zur Spindelachse 80 angeordnet ist.

Der Antrieb 140 kann dabei vorzugsweise so ausgebildet sein, daß er einerseits, beispielsweise über eine innere Welle 142, einen drehbaren Antrieb des Revolverkopfes 82 erlaubt, um die einzelnen Werkzeuge 84 in ihre Arbeitsstellung A zu bringen, andererseits, beispielsweise durch eine Umschalteinrichtung, über ein äußeres Wellenrohr 144 einen Antrieb von angetriebenen Werkzeugen 84 im Revolverkopf 82 erlaubt, wobei die innere Welle 142 und das äußere Wellenrohr 144 koaxial zueinander angeordnet sind.

Vorzugsweise sind bei dieser Ausrichtung der Revolverachse 80 in dem Revolverkopf 82 vorgesehene Werkzeugaufnahmen 146, beispielsweise in Form von Einstecklöchern, so ausgerichtet, daß deren Einsetzrichtung 148 in einem Winkel β von 90° - α ausgerichtet ist und somit die Einsetzrichtung 148 bei dem in Arbeitsstellung A stehenden Werkzeug 84A stets senkrecht zur Spindelachse 48 verläuft.

Vorzugsweise ist, wie in den Fig. 3 und 5 dargestellt, der Maschinenbettkörper 16 so ausgebildet, daß er zu einer Symmetrieebene S symmetrische Form aufweist, wobei die Symmetrieebene S durch die Spindelachsen 48 und 98 hindurchverläuft.

Ferner sind vorzugsweise auch die Z-Führungen 60 und 62 und die Schlittenführungsebenen ESa, ESb symmetrisch zur Symmetrieebene S angeordnet und somit auch die Werkzeugschlitten 50 und 52 sowie 110 und 112 symmetrisch zur Symmetrieebene S an dem Maschinenbettkörper 16, und zwar sowohl an dem ersten Trägerabschnitt 40 als auch an dem zweiten Trägerabschnitt 90, geführt.

Besonders kostengünstig herstellbar ist das erste Ausführungsbeispiel dann ausgebildet, wenn die Werkzeugschlitten 50 und 52 sowie 110 und 112 bezüglich der Symmetrieebenen S spiegelsymmetrisch zueinander aufgebaut sind, wobei die Werkzeugschlitten 50 und 112 sowie 52 und 110 außerdem noch identisch ausgebildet sind.

Noch vorteilhafter hinsichtlich einer kostengünstigen Herstellbarkeit ist es, wenn auch die Werkzeugträger 74 und 76 sowie 134 und 136 jeweils spiegelsymmetrisch zur Symmetrieebene S ausgebildet sind, und außerdem die Werkzeugträger 74 und 136 sowie 76 und 134 noch identisch aufgebaut sind.

Dieses Konzept der erfindungsgemäßen Werkzeugmaschine erlaubt alle rotationssymmetrischen Teile der Werkzeugschlitten 50, 52, 110, 112 und der Werkzeugträger 74, 76, 134, 136 als Gleichteile auszubilden und alle übrigen Teile zumindest insoweit, als sie zweifach Verwendung finden, ebenfalls als Gleichteile auszubilden.

Darüber hinaus erlaubt die erfindungsgemäße Lösung eine hohe Präzision, da sich die Wärmeausdehnungen beim Betrieb der Drehmaschine symmetrisch zur Symmetrieebene S in gleicher Weise auswirken und außerdem auch hinsichtlich der Position der Arbeitsspindeln 44 und 94 relativ zum Maschinenbettkörper 16 ebenfalls in gleicher Richtung auswirken, so daß bereits aufgrund des konstruktiven Konzeptes der erfindungsgemäßen Drehmaschine, insbesondere der Ausbildung des Maschinenbettkörpers 16 und der Anordnung der Werkzeugschlitten 50 und 52 sowie 110 und 112 an diesem, die Präzision bei der Bearbeitung beeinträchtigenden thermischen Effekte soweit als möglich reduziert sind.

Weiterhin werden die Werkzeugschlitten 50, 52 und 110, 112 und die Werkzeugträger 74, 76 und 134, 136 aufgrund ihres zur Symmetrieebene S spiegelsymmetrischen und über Kreuz identischen Aufbaus im wesentlichen ähnliche Wärmeausdehnungen aufweist, so daß auch dadurch die Präzision bei der Bearbeitung von Werkstücken W gesteigert werden kann.

Mit der erfindungsgemäßen Drehmaschine ist somit ein besonders einfaches und vorteilhaftes Konzept realisiert, bei welchem, wie in Fig. 4 dargestellt, jeweils mit den Werkzeugträgern 74 und 76 eine Bearbeitung des in der ersten Werkstückaufnahme 46 gehaltenen Werkstücks W auf einer ersten Seite 1S möglich ist und nach dieser Bearbeitung der Seite 1S des Werkstücks W durch Verfahren der zweiten Arbeitsspindel 94 in Z-Richtung zur ersten Arbeits- .. spindel 44 eine Übergabe des Werkstücks W von der ersten Werkstückaufnahme 46 in die zweite Werkstückaufnahme 96 realisierbar ist, wobei das Werkstück W durch die zweite Werkstückaufnahme 96 auf der bearbeiteten Seite 1S gegriffen wird und somit die zweite Seite 2S des Werkstücks W bearbeitet werden kann und zwar dadurch, daß die zweite Arbeitsspindel 96 in Z-Richtung wieder zurückfährt zum zweiten Trägerabschnitt 90, in welchem dann mittels der Werkzeugträger 134 und 136 eine vierachsige Bearbeitung der zweiten Seite 2S des Werkstücks W möglich ist, während gleichzeitig bei einem neuen Werkstück W die Seite 1S wiederum mit den Werkzeugträgern 74 und 76 vierachsig bearbeitet werden kann.

Besonders günstig ist bei der erfindungsgemäßen Drehmaschine die kurze Baulänge in Richtung 18 des Maschinenbettkörpers 16, da bei der ersten Arbeitsspindel 44 die erste Werkstückaufnahme 46 auf der dem zweiten Ende 22 zugewandten Seite des Spindelgehäuses 42 angeordnet ist und in gleicher Weise auch bei den Werkzeugträgern 74 und 76 jeweils die Werkzeuge 84 ebenfalls auf der dem zweiten Ende 22 zugewandten Seite angeordnet sind, so daß bei der Bearbeitung der ersten Seite 1S des Werkstücks W sowohl das Spindelgehäuse 42 als auch die Werkzeugträger 74 und 76 in der Längsrichtung 18 gesehen und bezogen auf die in Arbeitsstellung A stehenden Werkzeuge 84A auf derselben Seite liegen.

In gleicher Weise ist bei der zweiten Arbeitsspindel 94 die zweite Werkstückaufnahme 96 dem ersten Ende 20 zugewandt angeordnet und die Werkzeuge 84 der Werkzeugträger 134 und 136 sind ebenfalls dem ersten Ende 20 zugewandt angeordnet, so daß, bezogen auf die in Arbeitsstellung A stehenden Werkzeuge 84A ebenfalls sowohl das Spindelgehäuse 92 als auch die Werkzeugträger 134 und 136 auf derselben Seite liegen.

Damit sind in dem Fall, in dem die Werkzeugträger 74 und 76 sowie 134 und 136 als Revolver ausgebildet sind, die Revolverköpfe 82 sämtlicher an derselben Schlittenträgerseite 32 bzw. 34 angeordneter Werkzeugträger 74 und 134 bzw. 76 und 136 einander zugewandt, so daß die Revolverköpfe 82 mit geringem Abstand voneinander positioniert werden können, welcher im wesentlichen lediglich durch die eingesetzten Werkzeuge 84 und deren Erstreckung in der Längsrichtung 18 bestimmt ist.

Ferner schafft die schräge Anordnung der Revolverachse 80 relativ zu den jeweiligen Spindelachsen 48 und 98 die Möglichkeit, in vorteilhafter Weise Innenbearbeitungswerkzeuge 84I einsetzen zu können, da die der Arbeitsstellung A gegenüberliegenden Werkzeuge 84 aufgrund der Schrägstellung der Revolverachse 80 bereits einen größeren Abstand von dem Revolvergehäuse 78 aufweisen und somit der Abstand zwischen dem Revolverkopf 82 und dem Revolvergehäuse 78 minimiert werden kann.

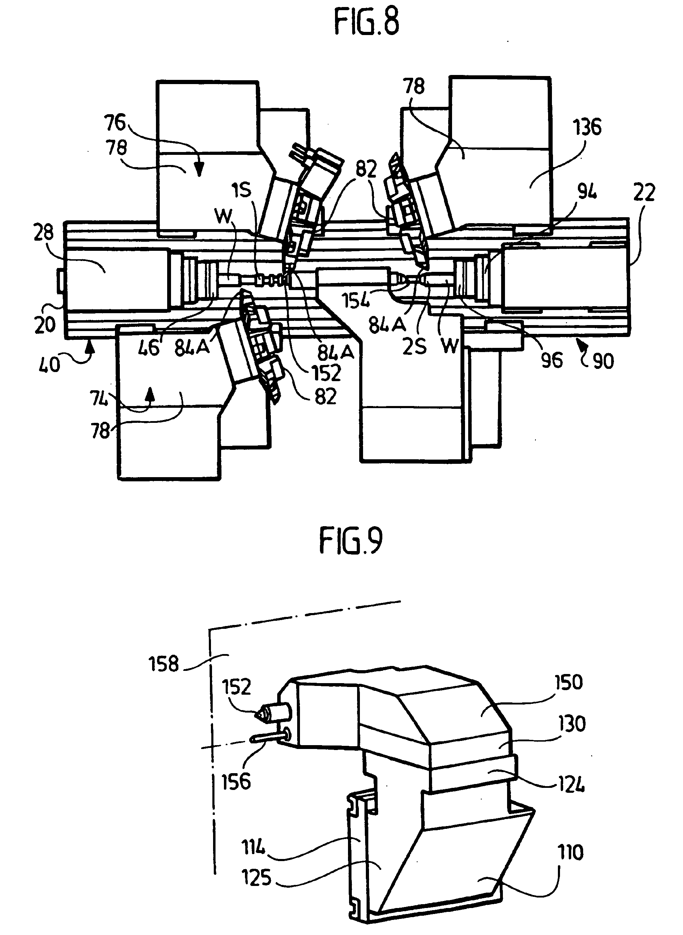

Bei einem zweiten Ausführungsbeispiel einer erfindungsgemäßen Drehmaschine, dargestellt in den Fig. 7 bis 9 sind diejenigen Teile, die mit denen des ersten Ausführungsbeispiels identisch sind, mit denselben Bezugszeichen versehen, so daß hinsichtlich der Beschreibung derselben auf die Ausführungen zu dem ersten Ausführungsbeispiel vollinhaltlich Bezug genommen werden kann.

Im Gegensatz zum ersten Ausführungsbeispiel ist bei dem zweiten Ausführungsbeispiel auf dem X-Schlittenkörper 130 des Werkzeugschlittens 110 kein Werkzeugträger angeordnet, sondern ein Reitstock, umfassend einen Reitstockträger 150, mit, wie in Fig. 8 und 9 dargestellt, vorzugsweise zwei Spitzen 152 und 154, wobei die Spitze 152 der ersten Werkstückaufnahme 46 zugewandt ist und die Spitze 154 er zweiten Werkstückaufnahme 96.

Mit diesen Spitzen 152 und 154 besteht die Möglichkeit, durch Einfahren derselben in eine koaxiale Ausrichtung zu den Spindelachsen 48 und 98 ein Werkstück W bei der Bearbeitung der ersten Seite 1S, nämlich durch die Spitze 152, und ein Werkstück W bei der Bearbeitung von dessen Seite 2S, nämlich durch die Spitze 154, abzustützen, so daß die Präzision und/oder Geschwindigkeit bei der Bearbeitung der Seiten 1S und 2S gesteigert werden kann.

Durch die Verschiebbarkeit des Reitstockträgers 150 in X-Richtung lassen sich die Spitzen 152 und 154 aus dem Bereich zwischen den Werkstückaufnahmen 46 und 96 herausbewegen, um somit das Werkstück W von der ersten Werkstückaufnahme 46 in die zweite Werkstückaufnahme 96 übergeben zu können.

Ferner besteht die Möglichkeit durch die Verfahrbarkeit des Reitstockträgers 150 in der Z-Richtung kombiniert mit der Verfahrbarkeit der zweiten Arbeitsspindel 94 in der Z-Richtung die Spitzen 152 und 154 in Eingriff und außer Eingriff zu bringen.

Bei dem zweiten Ausführungsbeispiel ist es nicht zwingend notwendig, den Werkzeugschlitten 110 identisch mit den übrigen Werkzeugschlitten 50, 52 und 112 auszubilden, es ist aber auch möglich, in diesem Fall den Werkzeugschlitten 110 jeweils identisch aufzubauen.

Insbesondere ist jedoch beim Werkzeugschlitten 110 der X-Führungskörper 124 auf dem Y-Schlitten 125 angeordnet, der seinerseits gegenüber dem Z-Schlittenkörper 114 in Y-Richtung bewegbar ist.

Damit besteht die Möglichkeit, den Reitstockträger als Elemententräger 150 zu nutzen und beispielsweise zusätzlich zu den Spitzen 152 und 154 noch eine Tieflochbohreinheit 156 oder alternativ dazu eine Mehrkantdreheinrichtung oder ähnliche Werkzeuge vorzusehen, die durch Verschiebung des Elemententrägers 150 in Y-Richtung in Eingriff bringbar sind, wobei vorzugsweise sowohl die Spitzen 152 und 154 sowie die zusätzlichen Werkzeuge, wie beispielsweise die Tieflochbohreinheit 156 mit ihren Mittelachsen in einer zur Y-Richtung parallelen Ebene 158 liegen, so daß nur eine Bewegung des Elemententrägers 150 in Y-Richtung erforderlich ist um zwischen den einzelnen Möglichkeiten zu wechseln.

Außerdem hat diese Lösung den Vorteil, daß beim Einsatz der Spitzen 152, 154 oder beim Einsatz des zusätzlichen Werkzeugs 156 jeweils das zusätzliche Werkzeug 156 bzw. die Spitzen 152, 154 in einer Stellung unterhalb oder oberhalb des zu bearbeitenden Werkstücks in der durch die jeweilige Spindelachse hindurch verlaufenden Ebene 158 stehen und somit die Kollisionsgefahr mit den Werkzeugen 84 minimiert ist.

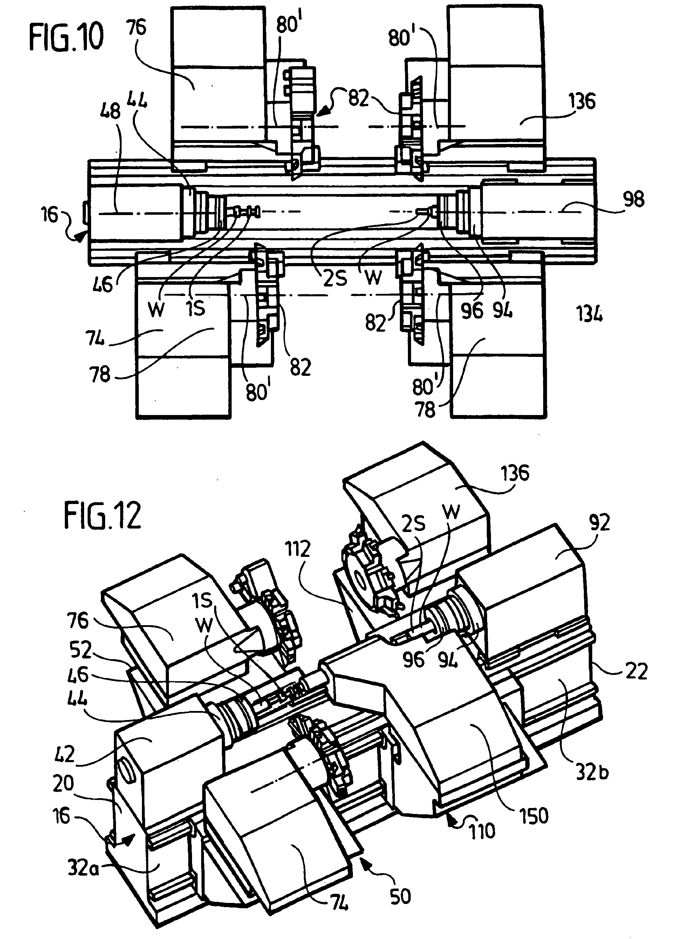

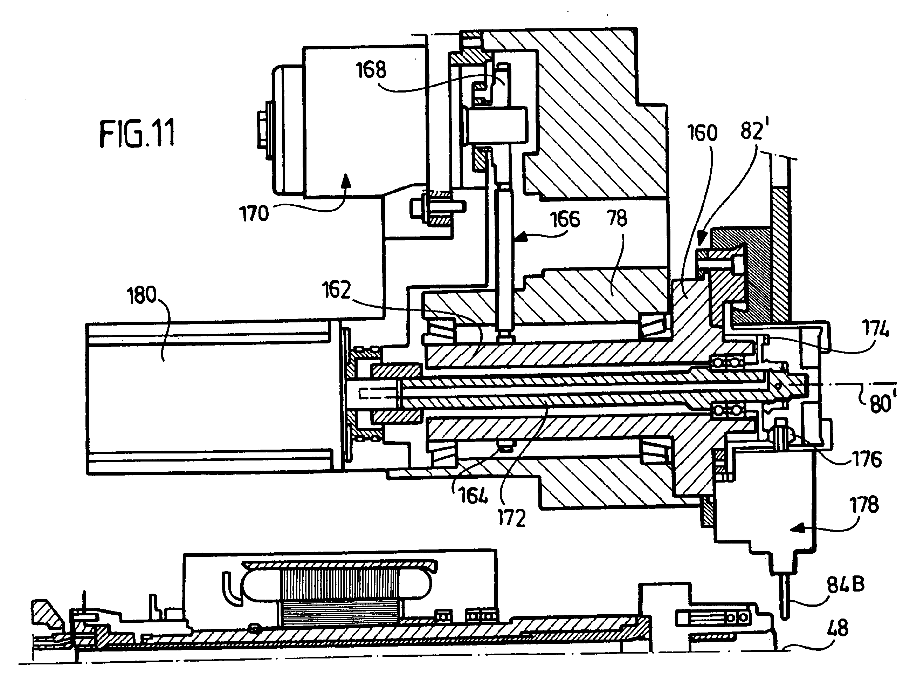

Bei einem dritten Ausführungsbeispiel einer erfindungsgemäßen Drehmaschine, dargestellt in Fig. 10, sind ebenfalls diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zu den voranstehenden Ausführungsbeispielen Bezug genommen werden kann.

Im Gegensatz zu den voranstehenden Ausführungsbeispielen sind bei dem dritten Ausführungsbeispiel die als Revolver ausgebildeten Werkzeugträger 74, 76, 134 und 136 mit einer parallel zu den jeweiligen Spindelachsen 48 und 98 verlaufenden Revolverachse 80' versehen.

Bei diesem Ausführungsbeispiel ist, wie in Fig. 11 dargestellt, der Revolverkopf 82 als Kopf eines Scheibenrevolvers 160 ausgebildet, wie in der Patentanmeldung PCT/EP00/03718 beschrieben.

Der Revolverkopf 160 ist dabei mittels einer Hohlwelle 162 drehbar in dem Revolvergehäuse 78 gelagert, wobei die Hohlwelle 162 eine Außenverzahnung 164 trägt, in welche ein Getrieberad 166 eingreift, das seinerseits über ein Antriebsritzel 168 eines als Ganzes mit 170 bezeichneten Drehantriebs für den Revolverkopf 160 antreibbar ist, um die einzelnen Werkzeuge 84 in Arbeitsstellung A bringen zu können.

Außerdem ist in der Hohlwelle 162 eine Antriebswelle 172 gelagert, welche ein im Revolverkopf versehenes Zahnrad 174 mit einer Stirnverzahnung trägt, das dazu dient, ein Antriebsritzel 176 eines antreibbaren Werkzeughalters 178 anzutreiben, in welchen als Werkzeug beispielsweise ein Bohrer 84b eingesetzt ist.

Die Antriebswelle 172 erstreckt sich dabei koaxial zur Hohlwelle 162 durch diese hindurch und ist durch einen Antrieb 180 antreibbar, der koaxial zur Antriebswelle 172 und somit auch zur Revolverachse 80' angeordnet ist.

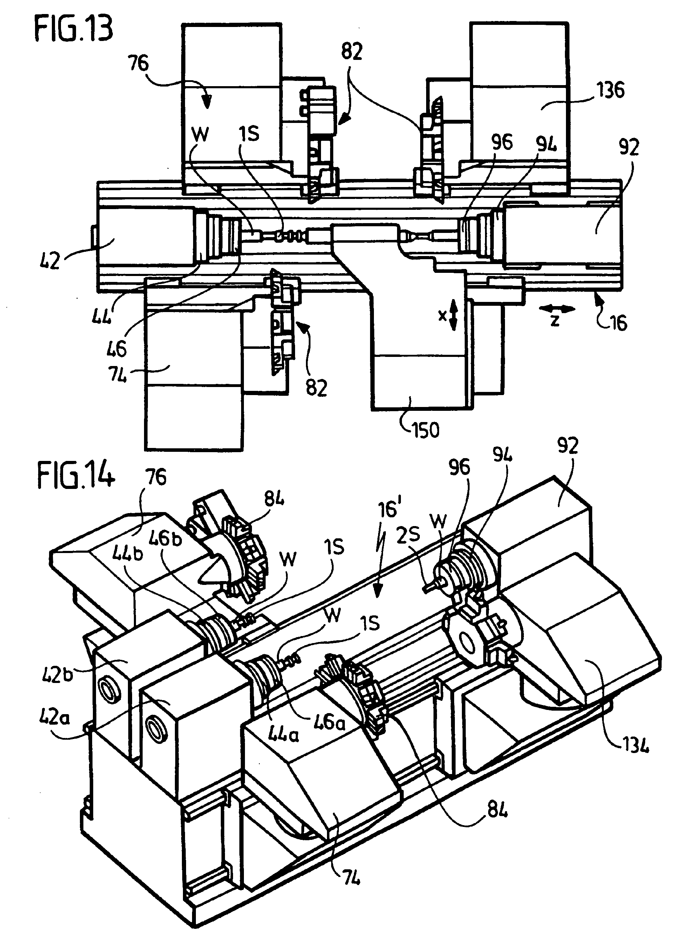

Bei einem vierten Ausführungsbeispiel, dargestellt in den Fig. 12 und 13 sind diejenigen Elemente, die mit denen der voranstehenden Ausführungsbeispiele identisch sind, mit denselben Bezugszeichen versehen, so daß diesbezüglich vollinhaltlich auf die voranstehenden Ausführungsbeispiele Bezug genommen werden kann.

Das vierte Ausführungsbeispiel stellt eine Abwandlung des dritten Ausführungsbeispiels insoweit dar, als einer der Werkzeugträger, nämlich der Werkzeugträger 134, in gleicher Weise wie beim zweiten Ausführungsbeispiel durch einen Reitstockträger 150 ersetzt ist, der ebenfalls in gleicher Weise wie beim zweiten Ausführungsbeispiel in X- und Z-Richtung bewegbar und entsprechend der Erläuterungen zum zweiten Ausführungsbeispiel bei der Abstützung der Werkstücke W zur Bearbeitung in der ersten Werkstückaufnahme 46 bzw. der zweiten Werkstückaufnahme 96 einsetzbar ist.

Bei einem fünften Ausführungsbeispiel, dargestellt in Fig. 14, sind diejenigen Elemente, die mit denen der voranstehenden Ausführungsbeispielen identisch sind, mit denselben Bezugszeichen versehen, so daß vollinhaltlich auf diese Bezug genommen wird.

Im Gegensatz zum dritten Ausführungsbeispiel ist der Maschinenbettkörper 16' verbreitert ausgeführt, so daß in der zweiten Querrichtung 30 nebeneinander zwei erste Spindelgehäuse 42a und 42b einsetzbar sind, die beispielsweise dann erforderlich sind, wenn unterschiedliche komplexe Arbeitsschritte an der ersten Seite 1S des Werkstücks W erforderlich sind, so daß die Werkzeuge 84 des Werkzeugträgers 76 die erste Seite des Werkstücks W dann bearbeiten, wenn das Werkstück W in der Werkstückaufnahme 46b gehalten ist, während eine Bearbeitung der ersten Seite des Werkstücks W mit den Werkzeugen 84 des Werkzeugträgers 74 dann erfolgt, wenn das Werkstück W in der ersten Werkstückaufnahme 46a der ersten Arbeitsspindel 44a gehalten ist.

Im übrigen ist fluchtend zur ersten Arbeitsspindel 44a, in gleicher Weise wie bei den voranstehenden Ausführungsbeispielen beschrieben, die zweite Arbeitsspindel 94 mit der zweiten Werkstückaufnahme 96 vorgesehen, deren Spindelgehäuse 92 ebenfalls in der beschriebenen Art und Weise in Z-Richtung verfahrbar ist, um das Werkstück W beispielsweise aus der ersten Werkstückaufnahme 46a zu übernehmen und das Werkstück W auf der zweiten Seite 2S zu bearbeiten, wobei in diesem Falle hierzu lediglich der Werkzeugträger 134 vorgesehen ist.

Es ist jedoch aber auch denkbar, zusätzlich noch den Werkzeugträger 136 vorzusehen, der jedoch aufgrund der breiteren Ausbildung des Maschinenbettkörpers 16 in der zweiten Querrichtung 30 so ausgebildet sein muß, daß dessen Werkzeuge ebenfalls noch das Werkstück W in der zweiten Werkstückaufnahme 96 erreichen können.

Die Übergabe des Werkstücks W von der Werkstückaufnahme 46b der ersten Arbeitsspindel 44b in die zweite Arbeitsspindel 44a erfolgt beispielsweise mit einer hierzu vorgesehenen externen Werkstückhandhabung.

Es sind aber auch noch weitere Modifikationen des fünften Ausführungsbeispiels denkbar.

Beispielsweise bestünde die Möglichkeit, die zweite Werkstückspindel 94 zusätzlich in X-Richtung bewegbar am Maschinenbettkörper 16 zu lagern, um sowohl aus der Arbeitsspindel 44a als auch aus der Arbeitsspindel 44b das Werkstück W entnehmen zu können.

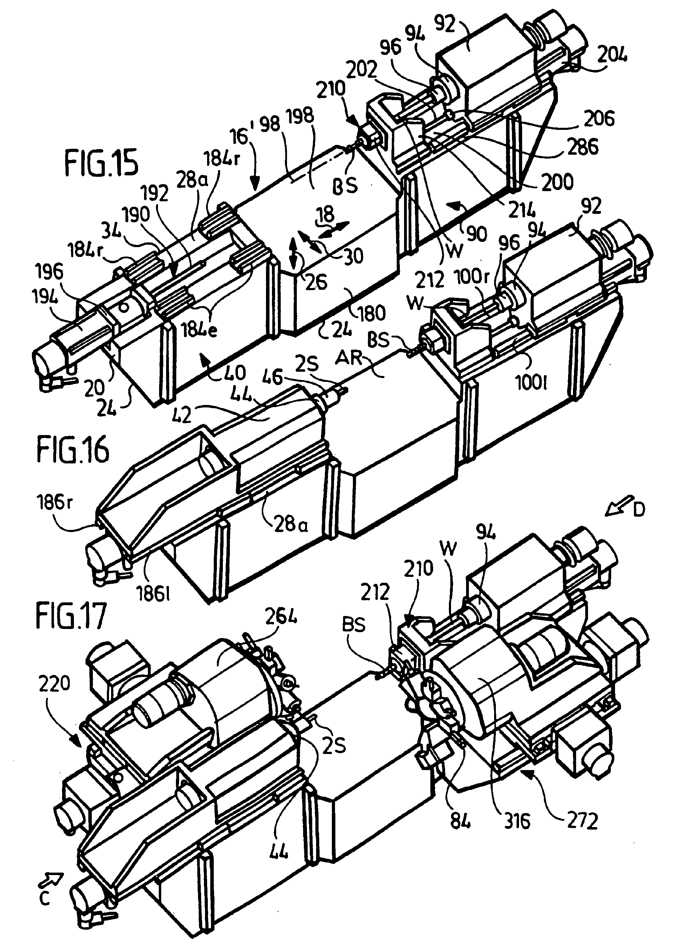

Bei einem sechsten Ausführungsbeispiel einer erfindungsgemäßen Drehmaschine, dargestellt in den Fig. 15 bis 17 umfaßt der Maschinenbettkörper 16' ebenfalls den ersten Trägerabschnitt 40 und den zweiten Trägerabschnitt 90. Im Gegensatz zum Maschinenbettkörper 16 ist allerdings zwischen dem ersten Trägerabschnitt 40 und dem zweiten Trägerabschnitt 90 ein Verbindungsabschnitt 180 mit verändertem Querschnitt vorgesehen, welcher vorzugsweise gegenüber den Trägerabschnitten 40 und 90 in der zweiten Querrichtung 30 verbreitert ist, jedoch in der ersten Querrichtung 26 in Richtung der Basisseite 24 reduziert ist, so daß eine der Basisseite 24 gegenüberliegende Oberseite 182 im Vergleich zu den Spindelträgerseiten 28a und 28b in Richtung der Basisseite 24 zurückgesetzt ist, um mehr Raum in einem über der Oberseite 182 liegenden Arbeitsraum AR zu schaffen.

Ferner ist bei dem sechsten Ausführungsbeispiel die erste Arbeitsspindel 44 mit ihrem ersten Spindelgehäuse 42 auf der Spindelträgerseite 28a in Z-Richtung verschiebbar gehalten. Hierzu sind auf der Spindelträgerseite 28a Führungskörper 184l und 184r vorgesehen, die eine Spindelführungsebene ESP' definieren und in denen Längsführungen 186l und 186r in der Z-Richtung verschiebbar geführt sind, wobei diese Längsführungen 186l und 186r an dem ersten Spindelgehäuse 42 gehalten sind.

Ferner ist in der Spindelträgerseite 28a eine Vertiefung 190 eingeformt, welche zur Aufnahme einer Vorschubspindel 192 und teilweise zur Aufnahme eines die Vorschubspindel 192 antreibenden Vorschubantriebs 194 dient, welcher sich beispielsweise über das erste Ende 20 des Maschinenbettkörpers 16 in der Längsrichtung 18 hinauserstreckt.

Ferner ist in der Vertiefung 190 noch ein sich quer durch diese erstreckender Flansch 196 eingeformt, an welchem der Vorschubantrieb 194 montierbar ist.

Darüber hinaus ist, wie in Fig. 15 und 16 dargestellt, auch die zweite Arbeitsspindel 94 in Z-Richtung verschiebbar auf dem zweiten Trägerabschnitt 90 geführt, wobei in diesem Fall dieselben Elemente zum Einsatz kommen, wie im Zusammenhang mit den voranstehenden Ausführungsbeispielen beschrieben.

Auch die Spindelträgerseite 28b des zweiten Trägerabschnitts ist mit einer Vertiefung 200 versehen, welche zur Aufnahme einer Vorschubspindel 202 dient, welche durch einen Vorschubantrieb 204 antreibbar ist. Dabei sitzt eine Spindelmutter 206 unmittelbar am zweiten Spindelgehäuse 92 der zweiten Arbeitsspindel 94 und außerdem ist der Vorschubantrieb 204 in gleicher Weise wie der Vorschubantrieb 194 an dem zweiten Trägerabschnitt 90 des Maschinenbettkörpers 16 fixiert.

Zusätzlich zum in Z-Richtung verschiebbaren zweiten Spindelgehäuse 92 der zweiten Arbeitsspindel 94 ist auf der Spindelträgerseite 28b des zweiten Trägerabschnitts 90 noch eine Führungseinrichtung 210 zum Langdrehen eines in der zweiten Werkstückaufnahme 96 der zweiten Arbeitsspindel 94 aufgenommenen Werkstücks W vorgesehen, wobei die Führungseinrichtung 210 beispielsweise eine das Werkstück W umfangsseitig präzise führende Führungsbüchse 212 umfaßt, die mit einem Führungsbüchsenhalter 214 an der Spindelträgerseite 28 des zweiten Trägerabschnitts 90 gelagert ist.

Die Führungsbüchse 212 führt das in der zweiten Werkstückaufnahme 96 der zweiten Arbeitsspindel 94 gehaltene Werkstück W so, daß eine über diese Führungsbüchse 212 in den Arbeitsraum AR überstehende Bearbeitungsseite BS koaxial zur zweiten Spindelachse 98 geführt ist, während die Länge der über die Führungsbüchse 212 überstehenden Seite BS durch Verfahren der zweiten Arbeitsspindel 94 in Z-Richtung vorgebbar ist.

Um das mittels der Führungseinrichtung 210 durch Langdrehen bearbeitete Werkstück W zur Bearbeitung der zweiten Seite 2S aus der Werkstückaufnahme 96 der zweiten Arbeitsspindel 94 entnehmen zu können, ist die erste Arbeitsspindel 44 in der Z-Richtung bis zur Führungseinrichtung 210 verfahrbar, so daß die erste Werkstückaufnahme 46 das Werkstück W im Bereich der Seite BS möglichst nahe der Führungsbüchse 212 übernehmen und damit aus der zweiten Werkstückaufnahme 96 herausziehen kann. Anschließend wird dann die erste Arbeitsspindel 44 wieder von der Führungseinrichtung 210 wegbewegt, und zwar soweit, daß die erste Arbeitsspindel 44 im wesentlichen über dem ersten Trägerabschnitt 40 steht.

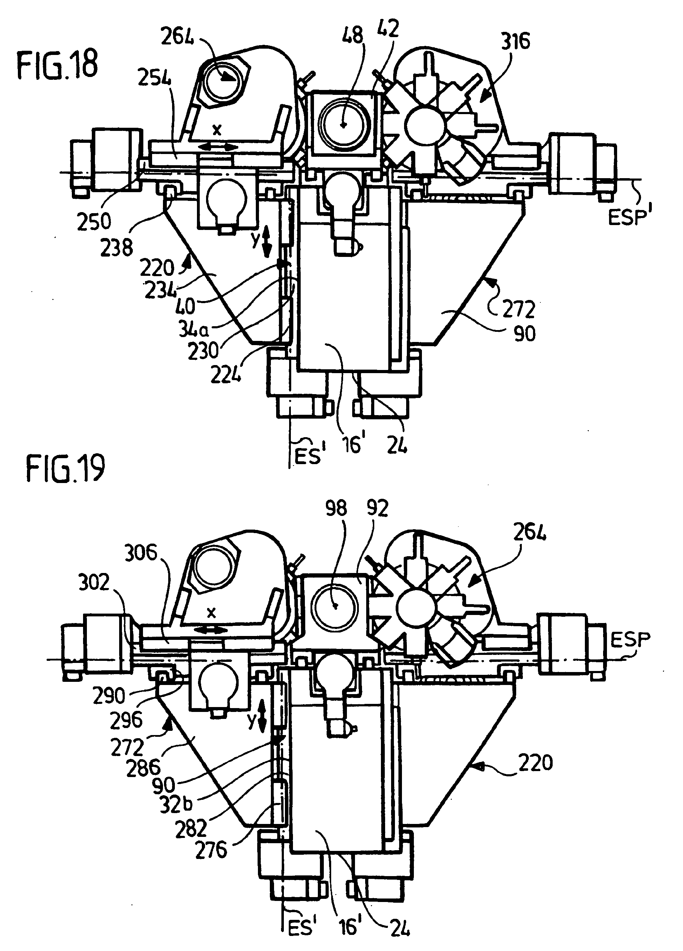

Zur Bearbeitung des Werkstücks W ist beispielsweise, wie in Fig. 18 dargestellt, an der Schlittenträgerseite 34a des ersten Trägerabschnitts 40 ein als Ganzes mit 220 bezeichneter Werkzeugschlitten gehalten.

Der Werkzeugschlitten 220 umfaßt dabei einen Y-Schlittenkörper 224, welcher an eine quer zur Spindelführungsebene ESP' verlaufende Schlittenführungsebene ES' aufspannenden Y-Führungen 230 in Y-Richtung, das heißt senkrecht zur X-Richtung und außerdem quer zur jeweiligen Spindelachse, das heißt zur ersten Spindelachse 48, relativ zum Maschinenbettkörper 16 geführt ist.

Der Y-Schlittenkörper 224 trägt seinerseits einen Z-Führungskörper 234 mit in Z-Richtung verlaufenden Z-Führungen 238, an welchen ein Z-Schlittenkörper 244 geführt ist, der seinerseits einen X-Führungskörper 250 trägt, an welchem ein in X-Richtung verschiebbarer X-Schlittenkörper 254 geführt ist.

Auf diesem X-Schlittenkörper ist dann ein als Ganzes mit 264 bezeichneter Werkzeugträger gehalten, welcher beispielsweise in gleicher Weise wie der Werkzeugträger 74 als Werkzeugrevolver mit dem Revolvergehäuse 78 und dem Revolverkopf 82 ausgebildet sein kann, wobei bei der zeichnerisch dargestellten Ausführungsform die Revolverachse 80' parallel zur ersten Spindelachse 48 verläuft, jedoch auch schräg zu dieser verlaufen kann, wie im Zusammenhang mit dem ersten Ausführungsbeispiel dargestellt.

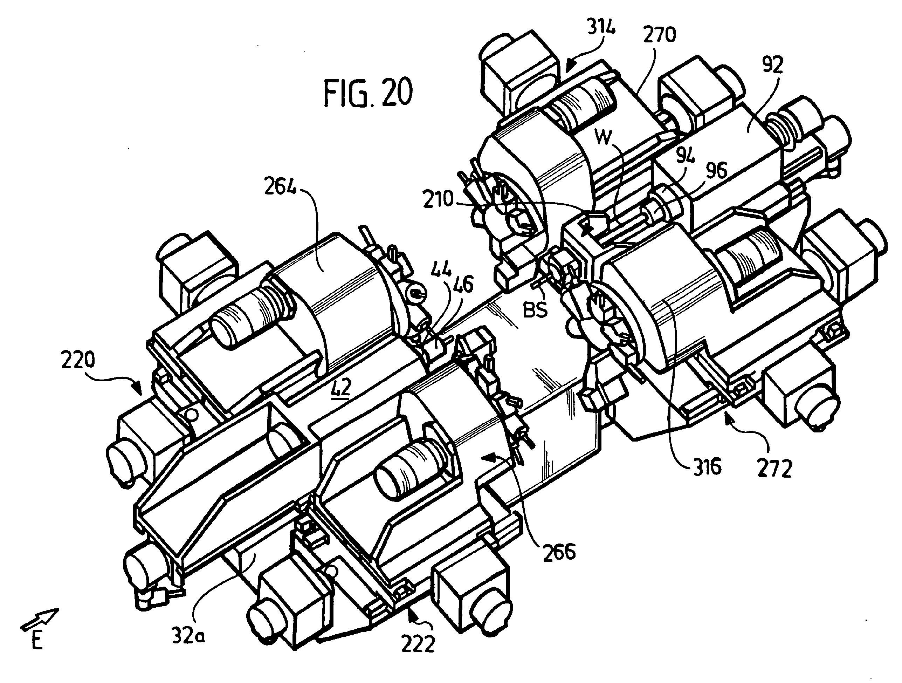

Ferner ist im Bereich des zweiten Trägerabschnitts 90 auf der Schlittenträgerseite 32b ein Werkzeugschlitten 272 vorgesehen, welcher einen Y-Schlittenkörper 276 umfaßt, der seinerseits an eine quer zur Spindelführungsebene ESP verlaufende und eine Schlittenführungsebene ES" aufspannenden Y-Führungen 282 geführt ist, welche an der Schlittenträgerseite 32b des Maschinenbettkörpers 16' fixiert sind (Fig. 19).

Ferner trägt der Y-Schlittenkörper 276 einen Z-Führungskörper 286, der Z-Führungen 290 trägt.

An den Z-Führungen 290 ist ein Z-Schlittenkörper 296 in Z-Richtung verschieblich geführt, der seinerseits einen X-Führungskörper 302 trägt, an welchem wiederum ein X-Schlittenkörper 306 in X-Richtung verschieblich geführt ist.

Auf dem X-Schlittenkörper sitzt ein als Ganzes mit 316 bezeichneter Werkzeugträger, welcher in gleicher Weise wie im Zusammenhang mit den voranstehenden Ausführungsbeispielen beschrieben, ausgebildet sein kann.

Mit diesen beiden Werkzeugträgern 316 und 264 besteht die Möglichkeit, einerseits das Werkstück W auf der Seite BS zu bearbeiten, wobei der Werkzeugträger 316 zum Einsatz kommt und vorzugsweise so gesteuert wird, daß die Werkzeuge 84 desselben stets möglichst nahe der Führungsbüchse 212 der Führungseinrichtung 210 arbeiten, um eine möglichst hohe Präzision zu erzielen.

Prinzipiell wäre es bei der Bearbeitung des Werkstücks W auf der Seite BS, die über die Führungsbüchse 212 in Richtung des ersten Trägerabschnitts 40 übersteht, nicht notwendig, eine Z-Verschiebbarkeit des Werkzeugträgers 316 vorzusehen, wie sie mit dem Werkzeugschlitten 272 realisiert ist, allerdings hat die Z-Bewegbarkeit des Werkzeugträgers 316 den großen Vorteil, daß damit stets das Werkstück W so bearbeitet werden kann, daß dieses von der zweiten Arbeitsspindel 94 lediglich in Richtung der ersten Arbeitsspindel 44 durch die Führungsbüchse 212 hin vorgeschoben wird, jedoch bei keiner Bearbeitung zurückgezogen werden muß, wodurch die Bearbeitungsgenauigkeit auf der Seite BS des Werkstücks W erheblich gesteigert werden kann.

Alle Bewegungen, bei welchen üblicherweise die Seite BS des Werkstücks W mit einem bearbeiteten Bereich wieder zurück in die Führungsbüchse 212 hineingezogen werden muß, lassen sich auf die Z-Bewegbarkeit des Werkzeugträgers 316, realisiert durch den Werkzeugschlitten 272, verlagern.

In gleicher Weise schafft auch der Werkzeugschlitten 220 aufgrund der Z-Bewegbarkeit des Werkzeugträgers 264 die Möglichkeit, das Werkstück W auch der Seite 2S optimal zu bearbeiten, wobei aufgrund der Z-Bewegbarkeit der ersten Arbeitsspindel 44 grundsätzlich die Z-Bewegbarkeit des Werkzeugträgers 264 ebenfalls nicht notwendig wäre, sich jedoch bei komplexen Bearbeitungen bewährt. Ferner ist vorzugsweise bei den Werkzeugschlitten 220 und 272 die Y-Achse in den Bereich der Fixierung des gesamten Werkzeugschlittens 220, 272 an dem Maschinenbettkörper 16 in den Bereich der Schlittenträgerseiten 34a und 32b verlegt, da die Y-Bewegung bei der Bearbeitung eines Werkstücks die geringste Dynamik aufweisen muß und somit die hochdynamischen Bewegungen, nämlich die Bewegung in Z-Richtung und die Bewegung in X-Richtung mit möglichst geringer, zu beschleunigender Masse erfolgen können.

Außerdem ist bei diesem Ausführungsbeispiel der erfindungsgemäßen Drehmaschine ohnehin ein geringer Weg in Z-Richtung erforderlich, so daß die Bewegbarkeit in Z-Richtung in raumsparender Weise in die Werkzeugschlitten 220 und 272 integriert werden kann.

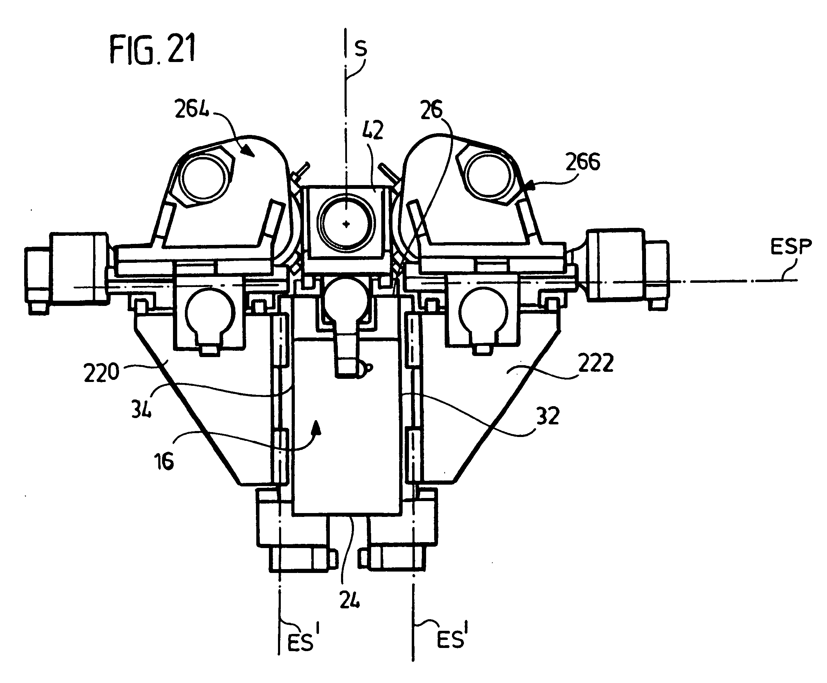

Bei einem siebten Ausführungsbeispiel, dargestellt in Fig. 20 und Fig. 21 basiert das Grundkonzept auf dem des sechsten Ausführungsbeispiels, so daß auf die Ausführung zum sechsten Ausführungsbeispiel vollinhaltlich Bezug genommen werden kann, insoweit als dieselben Teile Verwendung finden. Allerdings sind ergänzend zu den Werkzeugträgern 264 und 316 zusätzliche Werkzeugträger 314 und 266 vorgesehen, die jeweils an der gegenüberliegenden Schlittenträgerseite 32a und 34b angeordnet sind.

Damit liegt ein Konzept vor, wie dies bereits im Zusammenhang mit dem ersten Ausführungsbeispiel erläutert wurde, allerdings ist zusätzlich die Führungseinrichtung 210 zum Langdrehen vorhanden und gleichzeitig ist außerdem die erste Arbeitsspindel 44 in Z-Richtung verschiebbar.

Dabei sind in gleicher Weise wie im Zusammenhang mit dem ersten Ausführungsbeispiel oder dem dritten Ausführungsbeispiel erläutert, die Werkzeugträger 264 und 266 sowie 314 und 316 sowie die Werkzeugschlitten 220 und 222 sowie 270 und 272 jeweils zur Symmetrieebene S symmetrisch ausgebildet, und außerdem die Werkzeugschlitten 220 und 272 sowie 222 und 270 identisch ausgebildet. Gleiches gilt für die Werkzeugträger 264 und 316 sowie 266 und 314.

Damit besteht analog zum ersten oder dritten Ausführungsbeispiel die Möglichkeit, mit den Werkzeugen 84 der Werkzeugträger 314 und 316 die Seite BS des Werkstücks W zu bearbeiten und nach Übergabe des Werkstücks W von der Werkstückaufnahme 96 der zweiten Arbeitsspindel 94 in die erste Werkstückaufnahme 46 der ersten Arbeitsspindel 44 die Seite 2S des Werkstücks W mit den Werkzeugen 84 der Werkzeugträger 264 und 266 zu bearbeiten, wobei sich die in den Werkzeugschlitten 220 und 222 sowie 270 und 272 vorgesehene Z-Bewegbarkeit für die Werkzeugträger 264 und 266 sowie 314 und 316 für das unabhängige Arbeiten der Werkzeuge 84 jedes der Werkzeugträger 264 und 266 sowie 314 und 316 als vorteilhaft erweist und zusätzlich noch die Y-Bewegbarkeit der Werkzeugschlitten 220 und 222 sowie 270 und 272 vorteilhaft einsetzbar ist, um mit den Werkzeugen 84 jedes der Werkzeugträger 264 und 266 sowie 314 und 316 übliche Bearbeitungen unter Einsatz einer Y-Achse durchzuführen.

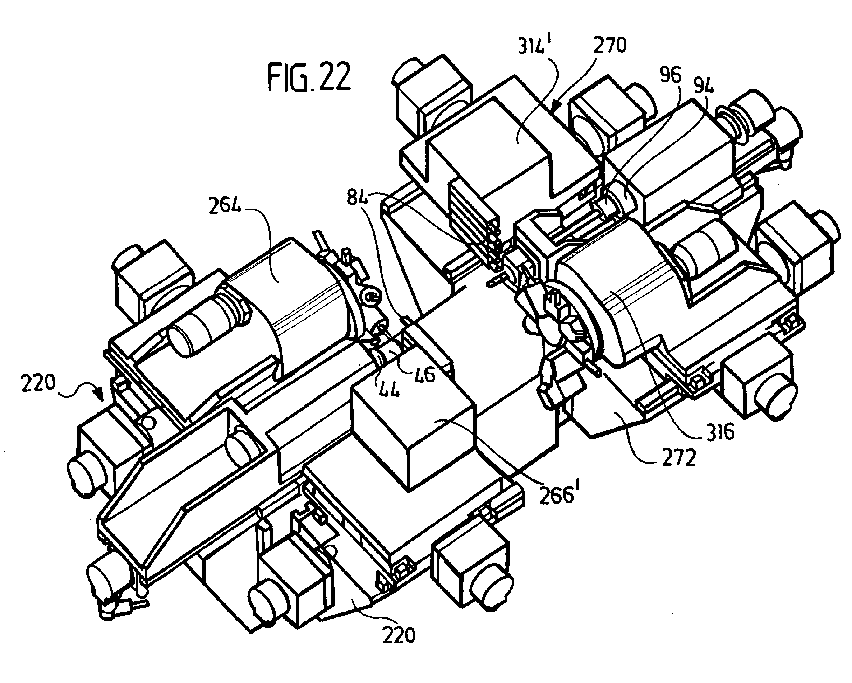

Bei einem achten Ausführungsbeispiel, dargestellt in Fig. 22 ist das ähnliche Konzept realisiert, wie bei dem siebten Ausführungsbeispiel, dargestellt in Fig. 20 und 21, allerdings mit dem Unterschied, daß auf den Werkzeugschlitten 222 und 270 keine Werkzeugträger 266 und 314 sitzen, sondern Linearwerkzeugträger 266' und 314', die ihrerseits untereinander wieder identisch ausgebildet sein können, allerdings nicht als Revolver ausgebildet sind, sondern in einer Reihe nebeneinander angeordnete Werkzeuge 84 zur Bearbeitung aufweisen.

Derartige Linearwerkzeugträger sind dann, wenn weniger Werkzeuge zum Einsatz kommen, vorteilhaft einsetzbar.

Auch bei dem achten Ausführungsbeispiel ist jedoch auch bei Verwendung der Linearwerkzeugträger 266' und 314' die Anordnung so gewählt, daß die Werkzeugschlitten 220, 222, 270, 272 und im wesentlichen auch die Werkzeug- - träger 264, 266', 312, 314' die Werkzeuge 84 auf der der gegenüberliegenden Arbeitsspindel 94 bzw. 44 zugewandten Seite tragen, so daß auch die Werkzeugträger 266' und 314' selbst bezogen auf das in Eingriff bringbare Werkzeug auf derselben Seite liegen, wie die Werkstückaufnahme 46 bzw. 96 der jeweiligen Arbeitsspindel 44 bzw. 94.

Bei einer Variante des sechsten, siebten und achten Ausführungsbeispiels ist es auch denkbar, die Führungseinrichtung 210 wegzulassen, und in der Art eine "Kurzdrehers" gemäß dem ersten bis fünften Ausführungsbeispiel zu arbeiten.

## Patentansprüche

1. Drehmaschine, umfassend ein auf einer Stellfläche (14) angeordnetes Maschinengestell (10), welches einen in einer Längsrichtung (18) langgestreckten Maschinenbettkörper (16) aufweist, der einen ersten Trägerabschnitt (40) und einen in der Längsrichtung (18) auf diesen folgend angeordneten zweiten Trägerabschnitt (90) aufweist, wobei jeder der Trägerabschnitte (40, 90) eine Basisseite (24), eine Spindelträgerseite (28) und zwei Schlittenträgerseiten (32, 34) aufweist,
eine erste, an dem Maschinengestell (10) angeordnete, um eine erste Spindelachse (48) rotierend antreibbare und auf der Spindelträgerseite (28a) des ersten Trägerabschnitts (40) angeordnete Arbeltsspindel (44) mit einer ersten Werkstückaufnahme (46),
mindestens einen ersten an einer der Schlittenträgerseiten (32a, 34a) des ersten Trägerabschnitts (40) angeordneten Werkzeugschlitten (50, 220), mit welchem ein Werkzeugträger (74, 76) in einer X-Richtung quer zur ersten Spindelachse (48) verfahrbar ist, so dass mit mindestens einem an dem Werkzeugträger (74, 76) gehaltenen Werkzeug ein In der ersten Werkstückaufnahme (46) gehaltenes Werkstück bearbeitbar ist, eine zweite an dem Maschinengestell (10) angeordnete, um eine zweite Spindelachse (98) rotierend antreibbare und auf der Spindelträgerseite (28b) des zweiten Trägerabschnitts (90) angeordnete Arbeitsspindel (94) mit einer zweiten Werkstückaufnahme (96), welche der ersten Werkstückaufnahme (46) zugewandt ist,
mindestens einen zweiten an einer der Schlittenträgerseiten (32b, 34b) des zweiten Trägerabschnitts (90) angeordneten Werkzeugschlitten (110, 270), mit welchem ein Werkzeugträger (134, 136) in einer X-Richtung quer zur zweiten Spindelachse (98) verfahrbar ist, so dass mit mindestens einem an dem Werkzeugträger (134, 136) gehaltenen Werkzeug ein in der zweiten Werkstückaufnahme (96) gehaltenes Werkstück (W) bearbeitbar ist,
**dadurch gekennzeichnet, dass** in jedem der Trägerabschnitte (40, 90) die Spindelträgerseite (28) in einer ersten Querrichtung (26) zur Längsrichtung (18) der Basisseite (24) gegenüberliegend angeordnet ist und die zwei Schlittenträgerseiten (32, 34) in einer senkrecht zur ersten Querrichtung (26) verlaufenden zweiten Querrichtung (30) zur Längsrichtung (18) einander gegenüberliegend, zwischen der Basisseite (24) und der Spindelträgerseite (28) liegen.

2. Drehmaschine nach Anspruch 1, **dadurch gekennzeichnet, daß** die Trägerabschnitte (40, 90) im wesentlichen denselben Querschnitt aufweisen.

3. Drehmaschine nach Anspruch 2, **dadurch gekennzeichnet, daß** der Maschinenbettkörper (16) sich balkenähnlich in der Längsrichtung (18) erstreckt.

4. Drehmaschine nach einem der voranstehenden Ansprüche, **dadurch gekennzeichnet, daß** zwischen den Trägerabschnitten (40, 90) ein Verbindungsabschnitt (180) vorgesehen ist.

5. Drehmaschine nach Anspruch 4, **dadurch gekennzeichnet, daß** der Verbindungsabschnitt (180) eine von den Trägerabschnitten (40, 90) abweichende Querschnittsform aufweist.

6. Drehmaschine nach einem der voranstehenden Ansprüche, **dadurch gekennzeichnet, daß** mindestens einer der Trägerabschnitte (40, 90) an seiner Spindelträgerseite (28a, 28b) in einer Spindelführungsebene (ESP) liegende Führungen (100, 184) für eine in Z-Richtung parallel zur jeweiligen Spindelachse (48, 98) verfahrbare Arbeitsspindel (44, 94) aufweist.

7. Drehmaschine nach Anspruch 6, **dadurch gekennzeichnet, daß** die Führungen (100, 184) in einer parallel zur Längsrichtung (18) verlaufenden Spindelführungsebene (ESP) liegen.

8. Drehmaschine nach einem der voranstehenden Ansprüche, **dadurch gekennzeichnet, daß** mindestens einer der Werkzeugschlitten (50, 110, 220, 270) mit in einer Schlittenführungsebene (ES) liegenden Schlittenführungen (60, 62, 230, 282) an dem Maschinenbettkörper (16) bewegbar geführt ist.

9. Drehmaschine nach Anspruch 8, **dadurch gekennzeichnet, daß** sich die Schlittenführungen (60, 62, 230, 282) in parallel zur Längsrichtung (18) verlaufenden Schlittenführungsebenen (ES) erstrecken.

10. Drehmaschine nach einem der voranstehenden Ansprüche, **dadurch gekennzeichnet, daß** die Schlittenträgerseiten (32, 34) des Maschinenbettkörpers (16) auf derselben Seite der Spindelführungsebene (ESP) liegen.

11. Drehmaschine nach einem der Ansprüche 6 bis 10, **dadurch gekennzeichnet, daß** die Schlittenführungsebene (ES) quer zur Spindelführungsebene (ESP) verläuft.

12. Drehmaschine nach Anspruch 11, **dadurch gekennzeichnet, daß** die einander gegenüberliegenden Schlittenführungsebenen (ES) quer zur Spindelführungsebene (ESP) verlaufen.

13. Drehmaschine nach Anspruch 12, **dadurch gekennzeichnet, daß** die Schlittenführungsebenen (ES) ungefähr senkrecht zur Spindelführungsebene (ESP) verlaufen.

14. Drehmaschine nach einem der voranstehenden Ansprüche, **dadurch gekennzeichnet, daß** für die Bearbeitung des jeweiligen Werkstücks (W) der entsprechende Werkzeugschlitten (50, 52, 110, 112, 220, 222, 270, 272) und die entsprechende Arbeitsspindel (44, 94) auf derselben Seite des jeweils zu diesem Werkstück (W) in Arbeitsstellung (A) stehenden Werkzeugs (84) angeordnet sind.

15. Drehmaschine nach einem der voranstehenden Ansprüche, **dadurch gekennzeichnet, daß** sämtliche für die Bearbeitung des in einer der Werkstückaufnahmen (46, 96) gehaltenen Werkstücks (W) einsetzbaren Werkzeugschlitten (50, 52, 110, 112, 220, 222, 270, 272), in Längsrichtung (18) des Maschinenbettkörpers (16) gesehen, im wesentlichen auf derselben Seite der in Arbeitsstellung (A) bringbaren von diesen getragenen Werkzeugen (84) angeordnet sind.

16. Drehmaschine nach einem der voranstehenden Ansprüche, **dadurch gekennzeichnet, daß** die dem jeweiligen Trägerabschnitt (40, 90) zugeordneten Werkzeugschlitten (50, 52, 110, 112, 220, 222, 270, 272) auf einer dem jeweils anderen Trägerabschnitt (90, 40) abgewandten Seite der von diesen getragenen Werkzeugen (84) angeordnet sind.

17. Drehmaschine nach einem der voranstehenden Ansprüche, **dadurch gekennzeichnet, daß** mindestens einem Trägerabschnitt (40, 90) zwei Werkzeugschlitten (50, 52, 110, 112, 220, 222, 270, 272) zugeordnet sind.

18. Drehmaschine nach einem der voranstehenden Ansprüche, **dadurch gekennzeichnet, daß** die Werkzeugschlitten (50, 52, 110, 112, 220, 222, 270, 272) an mindestens einem der Trägerabschnitte (40, 90) spiegelsymmetrisch zu einer Spiegelebene (ES) ausgebildet sind.

19. Drehmaschine nach einem der voranstehenden Ansprüche, **dadurch gekennzeichnet, daß** ein Werkzeugschlitten (50, 52, 220, 222) des einen Trägerabschnitts (40) mit einem Werkzeugschlitten (110, 112, 270, 272) des anderen Trägerabschnitts (90) identisch ausgebildet ist.

20. Drehmaschine nach Anspruch 19, **dadurch gekennzeichnet, daß** die miteinander identisch ausgebildeten Werkzeugschlitten (50, 112; 52, 110; 220, 272; 222, 270) an unterschiedlichen Schlittenträgerseiten (32, 34) des Maschinenbettkörpers (16) angeordnet sind.

21. Drehmaschine nach einem der Ansprüche 17 bis 20, **dadurch gekennzeichnet, daß** mindestens einer der zwei einer der Arbeitsspindeln (44, 94) zugeordneten Werkzeugschlitten (50, 52, 110, 112, 220, 222, 270, 272) einen in Z-Richtung bewegbaren Schlittenkörper (54, 56, 114, 116, 244, 296) aufweist.

22. Drehmaschine nach einem der voranstehenden Ansprüche, **dadurch gekennzeichnet, daß** an den Schlittenträgerseiten (32, 34) die Schlittenführungen (60, 62, 230, 282) für den mindestens einen Werkzeugschlitten (50, 52, 110, 112, 220, 222, 270, 272) jeweils im Bereich der Trägerabschnitte (40, 90) vorgesehen sind.

23. Drehmaschine nach Anspruch 22, **dadurch gekennzeichnet, daß** die Schlittenführungen (230, 282) außerhalb eines Längsabschnitts des Maschinenbettkörpers (16) angeordnet sind, in welchen ein Arbeitsraum (AR) liegt.

24. Drehmaschine nach einem der voranstehenden Ansprüche, **dadurch gekennzeichnet, daß** die Werkzeugschlitten (50, 52, 110, 112) an den Schlittenträgerseiten (32, 34) des Maschinenbettkörpers (16) in Z-Richtung bewegbar geführt sind.

25. Drehmaschine nach einem der voranstehenden Ansprüche, **dadurch gekennzeichnet, daß** an mindestens einer Schlittenträgerseite (32, 34) Z-Führungen (60, 62) für die bewegbare Führung des jeweiligen Werkzeugschlittens (50, 52, 110, 112) vorgesehen sind.

26. Drehmaschine nach Anspruch 25, **dadurch gekennzeichnet, daß** die Z-Führungen (60, 62) der Schlittenträgerseite (32, 34) eines Trägerabschnitts (40) mit Z-Führungen (60, 62) derselben Schlittenträgerseite (32, 34) des anderen Trägerabschnitts (90) fluchten.

27. Drehmaschine nach Anspruch 26, **dadurch gekennzeichnet, daß** die Z-Führungen (60, 62) der Schlittenträgerseiten (32, 34) beider Trägerabschnitte (40, 90) ineinander übergehen.

28. Drehmaschine nach Anspruch 27, **dadurch gekennzeichnet, daß** die Z-Führungen (60, 62) sich über den Verbindungsabschnitt (180) hinweg erstrecken.

29. Drehmaschine nach einem der Ansprüche 1 bis 24, **dadurch gekennzeichnet, daß** mindestens einer der Werkzeugschlitten (50, 52, 110, 112, 220, 222, 270, 272) einen Y-Schlittenkörper (224, 276) umfaßt, welcher an der Schlittenträgerseite (32, 34) des Maschinenbettkörpers (16) in Y-Richtung bewegbar geführt ist.

30. Drehmaschine nach einem der voranstehenden Ansprüche, **dadurch gekennzeichnet, daß** an mindestens einer Schlittenträgerseite (32, 34) Y-Führungen (230, 282) für die bewegbare Führung des jeweiligen Werkzeugschlittens (220, 222, 270, 272) vorgesehen sind.

31. Drehmaschine nach Anspruch 29 oder 30, **dadurch gekennzeichnet, daß** mindestens einer der Werkzeugschlitten (220, 222, 270, 272) einen Z-Schlittenkörper (244, 296) umfaßt, welcher gegenüber dem an der Schlittenträgerseite (32, 34) geführten Y-Schlittenkörper (224, 276) in Z-Richtung bewegbar ist.

32. Drehmaschine nach einem der voranstehenden Ansprüche, **dadurch gekennzeichnet, daß** jeder Werkzeugschlitten (50, 52, 110, 112, 220, 222, 270, 272) einen X-Schlittenkörper (70, 72, 130, 132, 254, 306) umfaßt, welcher gegenüber einem an der Schlittenträgerseite (32, 34) geführten Schlittenkörper (54, 56, 114, 116, 224, 276) in X-Richtung bewegbar geführt ist.

33. Drehmaschine nach einem der voranstehenden Ansprüche, **dadurch gekennzeichnet, daß** für die Bearbeitung des jeweiligen Werkstücks (W) der entsprechende Werkzeugträger (74, 76, 134, 136, 264, 266, 314, 316) und die entsprechende Werkstückaufnahme (76, 96) in Längsrichtung (18) des Maschinenbettkörpers (16) gesehen im wesentlichen auf derselben Seite des jeweils zu diesem Werkstück (W) in Arbeitsstellung (A) stehenden Werkzeugs (84) angeordnet sind.

34. Drehmaschine nach einem der voranstehenden Ansprüche, **dadurch gekennzeichnet, daß** sämtliche für die Bearbeitung des in einer der Werkstückaufnahmen (46, 96) gehaltenen Werkstücks (W) einsetzbaren Werkzeugträger (74, 76, 134, 136, 264, 266, 314, 316) in Längsrichtung (18) des Maschinenbettkörpers (16) gesehen im wesentlichen auf derselben Seite der in Arbeitsstellung (A) bringbaren Werkzeuge (84) angeordnet sind.

35. Drehmaschine nach einem der voranstehenden Ansprüche, **dadurch gekennzeichnet, daß** die dem jeweiligen Trägerabschnitt (40, 90) zugeordneten Werkzeugträger (74, 76, 134, 136, 264, 266, 314, 316) sich im wesentlichen in Richtung einer dem jeweils anderen Trägerabschnitt (90, 40) abgewandten Seite der jeweils von diesen getragenen Werkzeuge (84) erstrecken.

36. Drehmaschine nach einem der voranstehenden Ansprüche, **dadurch gekennzeichnet, daß** mindestens einer der Arbeitsspindeln (44, 94) zwei Werkzeugträger (74, 76, 264, 266; 134, 136, 314, 316) zugeordnet sind.

37. Drehmaschine nach Anspruch 36, **dadurch gekennzeichnet, daß** die Werkzeugträger (74, 76, 264, 266; 134, 136, 314, 316) an mindestens einem der Trägerabschnitte (40, 90) spiegelsymmetrisch zu einer Spiegelebene (ES) ausgebildet sind.

38. Drehmaschine nach einem der voranstehenden Ansprüche, **dadurch gekennzeichnet, daß** ein Werkzeugträger (74, 76, 264, 266) des einen Trägerabschnitts (40) mit dem Werkzeugträger (136, 134, 316, 314) des anderen Trägerabschnitts (90) identisch ausgebildet ist.

39. Drehmaschine nach Anspruch 38, **dadurch gekennzeichnet, daß** die miteinander identisch ausgebildeten Werkzeugträger (74, 136; 76, 134; 264, 316; 266, 314) an unterschiedlichen Schlittenträgerseiten (32, 34) des Maschinenbettkörpers (16) angeordnet sind.

40. Drehmaschine nach einem der voranstehenden Ansprüche, **dadurch gekennzeichnet, daß** die Werkzeugträger (74, 76, 134, 136, 264, 266, 314, 316) als Mehrfachwerkzeugträger ausgebildet sind.

41. Drehmaschine nach Anspruch 40, **dadurch gekennzeichnet, daß** mindestens einer der Werkzeugträger (74, 76, 134, 136, 264, 266, 314, 316) als Werkzeugrevolver (78, 82) ausgebildet ist.

42. Drehmaschine nach Anspruch 41, **dadurch gekennzeichnet, daß** der Werkzeugrevolver (78, 82) eine in einem Winkel von weniger als 45° zur jeweiligen Spindelachse (48, 98)verlaufende Revolverachse (80, 80') aufweist.

43. Drehmaschine nach Anspruch 42, **dadurch gekennzeichnet, daß** die Revolverachse (80') im wesentlichen parallel zur jeweiligen Spindelachse (48, 98) verläuft.

44. Drehmaschine nach Anspruch 42, **dadurch gekennzeichnet, daß** die Revolverachse (80) in einem Winkelbereich von ungefähr 10° bis ungefähr 30° zur jeweiligen Spindelachse (48, 98) verläuft.

45. Drehmaschine nach einem der voranstehenden Ansprüche, **dadurch gekennzeichnet, daß** einer der Werkzeugschlitten (110) einen Elemententräger(150) für am Werkstück (W) einsetzbare Elemente (152, 154, 156) trägt.

46. Drehmaschine nach Anspruch 45, **dadurch gekennzeichnet, daß** der Elemententräger (150) ein Werkstückstützelement (152, 154) als Element trägt.

47. Drehmaschine nach Anspruch 46, **dadurch gekennzeichnet, daß** das Werkstückstützelement eine Aufnahme (152, 154) zur Abstützung des Werkstücks (W) ist.

48. Drehmaschine nach einem der Ansprüche 45 bis 47, **dadurch gekennzeichnet, daß** der Elemententräger (150) ein Werkzeug (156) als Element trägt.

49. Drehmaschine nach einem der Ansprüche 45 bis 48, **dadurch gekennzeichnet, daß** die Elemente (152, 154, 156) mit ihrer Mittelachse in einer Ebene (158) liegen.

50. Drehmaschine nach Anspruch 49, **dadurch gekennzeichnet, daß** die Ebene (158) parallel zur Y-Achse verläuft.

51. Drehmaschine nach einem der voranstehenden Ansprüche, **dadurch gekennzeichnet, daß** mindestens eine der Arbeitsspindeln (44, 94) in Z-Richtung so weit in Richtung der anderen Arbeitsspindel (44, 94) verschiebbar ist, daß eine Übergabe des Werkstücks (W) von einer Werkstückaufnahme (46, 96) zur anderen Werkstückaufnahme (96, 46) durchführbar ist.

52. Drehmaschine nach einem der voranstehenden Ansprüche, **dadurch gekennzeichnet, daß** die Führungen (100, 184) für die in Z-Richtung verschiebbare Arbeitsspindel (44, 94) jeweils im Bereich der Trägerabschnitte (40, 90) angeordnet sind.

53. Drehmaschine nach Anspruch 52, **dadurch gekennzeichnet, daß** die Führungen (184, 100') außerhalb eines Längsabschnitts des Maschinenbettkörpers (16) angeordnet sind, in welchem ein Arbeitsraum (AR) liegt.

54. Drehmaschine nach einem der voranstehenden Ansprüche, **dadurch gekennzeichnet, daß** einer der Arbeitsspindeln (94) eine Führungseinrichtung (210) zum Langdrehen zugeordnet ist.

55. Drehmaschine nach Anspruch 54, **dadurch gekennzeichnet, daß** die Arbeitsspindel (94) relativ zur Führungseinrichtung (210) in Z-Richtung bewegbar ist.

56. Drehmaschine nach Anspruch 54 oder 55, **dadurch gekennzeichnet, daß** die Arbeitsspindel (94) auf auf der Spindelträgerseite (28b) des Trägerabschnitts (90) angeordneten Z-Führung geführt ist.

57. Drehmaschine nach einem der Ansprüche 54 bis 56, **dadurch gekennzeichnet, daß** die Führungseinrichtung (210) stationär auf dem Trägerabschnitt (90) gehalten ist.

58. Drehmaschine nach einem der Ansprüche 54 bis 57, **dadurch gekennzeichnet, daß** die gegenüberliegende Arbeitsspindel (44) in Z-Richtung relativ zum Trägerabschnitt (40) bewegbar ist.

59. Drehmaschine nach Anspruch 58, **dadurch gekennzeichnet, daß** die gegenüberliegende Arbeitsspindel (44) in Z-Richtung so weit verschiebbar ist, daß deren Werkstückaufnahme (46) die Führungseinrichtung (210) erreicht.

## Claims

1. Lathe comprising a machine frame (10) arranged on a support surface (14), said machine frame having a machine base member (16) elongated in a longitudinal direction (18), said machine base member having a first support section (40) and a second support section (90) arranged to follow this in the longitudinal direction (18), wherein each of the support sections (40, 90) has a base side (24), a spindle support side (28) and two slide support sides (32, 34),
a first working spindle (44) with a first workpiece receiving means (46), said first working spindle being arranged on the machine frame (10), being drivable for rotation about a first spindle axis (48) and being arranged on the spindle support side (28a) of the first support section (40),
at least one first tool slide (50, 220) arranged on one of the slide support sides (32a, 34a) of the first support section (40) for displacing a tool carrier (74, 76) in an X direction transversely to the first spindle axis (48) so that a workpiece held in the first workpiece receiving means (46) is machinable with at least one tool held on the tool carrier (74, 76),
a second working spindle (94) with a second workpiece receiving means (96) facing the first workpiece receiving means (46), said second working spindle being arranged on the machine frame (10), being drivable for rotation about a second spindle axis (98) and being arranged on the spindle support side (28b) of the second support section (90),
at least one second tool slide (110, 270) arranged on one of the slide support sides (32b, 34b) of the second support section (90) for displacing a tool carrier (134, 136) in an X direction transversely to the second spindle axis (98) so that a workpiece (W) held in the second workpiece receiving means (96) is machinable with at least one tool held on the tool carrier (134, 136),
**characterized in that** in each of the support sections (40, 90) the spindle support side (28) is arranged so as to be located opposite the base side (24) in a first transverse direction (26) in relation to the longitudinal direction (18) and the two slide support sides (32, 34) are located between the base side (24) and the spindle support side (28) and opposite one another in a second transverse direction (30) in relation to the longitudinal direction (18) extending at right angles to the first transverse direction (26).

2. Lathe as defined in claim 1, **characterized in that** the support sections (40, 90) have essentially the same cross section.

3. Lathe as defined in claim 2, **characterized in that** the machine base member (16) extends like a beam in the longitudinal direction (18).

4. Lathe as defined in any one of the preceding claims, **characterized in that** a connecting section (180) is provided between the support sections (40, 90).

5. Lathe as defined in claim 4, **characterized in that** the connecting section (180) has a cross-sectional shape different from the support sections (40, 90).

6. Lathe as defined in any one of the preceding claims, **characterized in that** at least one of the support sections (40, 90) has on its spindle support side (28a, 28b) guide means (100, 184) for a working spindle (44, 94) displaceable in Z direction parallel to the respective spindle axis (48, 98), said guide means being located in a spindle guide plane (ESP).

7. Lathe as defined in claim 6, **characterized in that** the guide means (100, 184) are located in a spindle guide plane (ESP) extending parallel to the longitudinal direction (18).

8. Lathe as defined in any one of the preceding claims, **characterized in that** at least one of the tool slides (50, 110, 220, 270) is guided so as to be movable on the machine base member (16) by slide guide means (60, 62, 230, 282) located in a slide guide plane (ES).

9. Lathe as defined in claim 8, **characterized in that** the slide guide means (60, 62, 230, 282) extend in slide guide planes (ES) running parallel to the longitudinal direction (18).

10. Lathe as defined in any one of the preceding claims, **characterized in that** the slide support sides (32, 34) of the machine base member (16) are located on the same side of the spindle guide plane (ESP).

11. Lathe as defined in any one of claims 6 to 10, **characterized in that** the slide guide plane (ES) extends transversely to the spindle guide plane (ESP).

12. Lathe as defined in claim 11, **characterized in that** the slide guide planes (ES) located opposite one another extend transversely to the spindle guide plane (ESP).

13. Lathe as defined in claim 12, **characterized in that** the slide guide planes (ES) extend approximately at right angles to the spindle guide plane (ESP).

14. Lathe as defined in any one of the preceding claims, **characterized in that** for the machining of the respective workpiece (W) the corresponding tool slide (50, 52, 110, 112, 220, 222, 270, 272) and the corresponding working spindle (44, 94) are arranged on the same side of the respective tool (84) located in working position (A) in relation to this workpiece (W).

15. Lathe as defined in any one of the preceding claims, **characterized in that** all the tool slides (50, 52, 110, 112, 220, 222, 270, 272) usable for the machining of the workpiece (W) held in one of the workpiece receiving means (46, 96) are, when seen in longitudinal direction (18) of the machine base member (16), arranged essentially on the same side of the tools (84) borne by them and adapted to be brought into working position (A).

16. Lathe as defined in any one of the preceding claims, **characterized in that** the tool slides (50, 52, 110, 112, 220, 222, 270, 272) associated with the respective support section (40, 90) are arranged on a side of the tools (84) borne by them facing away from the respectively other support section (90, 40).

17. Lathe as defined in any one of the preceding claims, **characterized in that** two tool slides (50, 52, 110, 112, 220, 222, 270, 272) are associated with at least one support section (40, 90).

18. Lathe as defined in any one of the preceding claims, **characterized in that** the tool slides (50, 52, 110, 112, 220, 222, 270, 272) on at least one of the support sections (40, 90) are designed to be in mirror symmetry to a mirror plane (ES).

19. Lathe as defined in any one of the preceding claims, **characterized in that** a tool slide (50, 52, 220, 222) of the one support section (40) is of an identical design to a tool slide (110, 112, 270, 272) of the other support section (90).

20. Lathe as defined in claim 19, **characterized in that** the tool slides (50, 112; 52, 110; 220, 272; 222, 270) of an identical design to one another are arranged on different slide support sides (32, 34) of the machine base member (16).

21. Lathe as defined in any one of claims 17 to 20, **characterized in that** at least one of the two tool slides (50, 52, 110, 112, 220, 222, 270, 272) associated with one of the working spindles (44, 94) has a slide member (54, 56, 114, 116, 244, 296) movable in Z direction.

22. Lathe as defined in any one of the preceding claims, **characterized in that** the slide guide means (60, 62, 230, 282) for the at least one tool slide (50, 52, 110, 112, 220, 222, 270, 272) are respectively provided in the area of the support sections (40, 90) on the slide support sides (32, 34).

23. Lathe as defined in claim 22, **characterized in that** the slide guide means (230, 282) are arranged outside a longitudinal section of the machine base member (16) having a working space (AR) located in it.

24. Lathe as defined in any one of the preceding claims, **characterized in that** the tool slides (50, 52, 110, 112) are guided on the slide support sides (32, 34) of the machine base member (16) so as to be movable in Z direction.

25. Lathe as defined in any one of the preceding claims, **characterized in that** Z guide means (60, 62) for the movable guidance of the respective tool slide (50, 52, 110, 112) are provided on at least one slide support side (32, 34).

26. Lathe as defined in claim 25, **characterized in that** the Z guide means (60, 62) of the slide support side (32, 34) of one support section (40) are aligned with Z guide means (60, 62) of the same slide support side (32, 34) of the other support section (90).

27. Lathe as defined in claim 26, **characterized in that** the Z guide means (60, 62) of the slide support sides (32, 34) of both support sections (40, 90) merge into one another.

28. Lathe as defined in claim 27, **characterized in that** the Z guide means (60, 62) extend beyond the connecting section (180).

29. Lathe as defined in any one of claims 1 to 24, **characterized in that** at least one of the tool slides (50, 52, 110, 112, 220, 222, 270, 272) comprises a Y slide member (224, 276) guided on the slide support side (32, 34) of the machine base member (16) so as to be movable in Y direction.

30. Lathe as defined in any one of the preceding claims, **characterized in that** Y guide means (230, 282) for the movable guidance of the respective tool slide (220, 222, 270, 272) are provided on at least one slide support side (32, 34).

31. Lathe as defined in claim 29 or 30, **characterized in that** at least one of the tool slides (220, 222, 270, 272) comprises a Z slide member (244, 296) movable in Z direction in relation to the Y slide member (224, 276) guided on the slide support side (32, 34).

32. Lathe as defined in any one of the preceding claims, **characterized in that** each tool slide (50, 52, 110, 112, 220, 222, 270, 272) comprises an X slide member (70, 72, 130, 132, 254, 306) guided for movement in X direction in relation to a slide member (54, 56, 114, 116, 224, 276) guided on the slide support side (32, 34).

33. Lathe as defined in any one of the preceding claims, **characterized in that** for the machining of the respective workpiece (W) the corresponding tool carrier (74, 76, 134, 136, 264, 266, 314, 316) and the corresponding workpiece receiving means (76, 96) are, when seen in longitudinal direction (18) of the machine base member (16), arranged essentially on the same side of the respective tool (84) located in working position (A) in relation to this workpiece (W).

34. Lathe as defined in any one of the preceding claims, **characterized in that** all the tool carriers (74, 76, 134, 136, 264, 266, 314, 316) usable for the machining of the workpiece (W) held in one of the workpiece receiving means (46, 96) are, when seen in longitudinal direction (18) of the machine base member (16), arranged essentially on the same side of the tools (84) adapted to be brought into working position (A).

35. Lathe as defined in any one of the preceding claims, **characterized in that** the tool carriers (74, 76, 134, 136, 264, 266, 314, 316) associated with the respective support section (40, 90) extend essentially in the direction of a side of the respective tools (84) borne by them facing away from the respectively other support section (90, 40).

36. Lathe as defined in any one of the preceding claims, **characterized in that** two tool carriers (74, 76, 264, 266; 134, 136, 314, 316) are associated with at least one of the working spindles (44, 94).

37. Lathe as defined in claim 36, **characterized in that** the tool carriers (74, 76, 264, 266; 134, 136, 314, 316) on at least one of the support sections (40, 90) are designed to be in mirror symmetry to a mirror plane (ES).

38. Lathe as defined in any one of the preceding claims, **characterized in that** a tool carrier (74, 76, 264, 266) of the one support section (40) is of an identical design to the tool carrier (136, 134, 316, 314) of the other support section (90).

39. Lathe as defined in claim 38, **characterized in that** the tool carriers (74, 136; 76, 134; 264, 316; 266, 314) of an identical design to one another are arranged on different slide support sides (32, 34) of the machine base member (16).

40. Lathe as defined in any one of the preceding claims, **characterized in that** the tool carriers (74, 76, 134, 136, 264, 266, 314, 316) are designed as multiple tool carriers.

41. Lathe as defined in claim 40, **characterized in that** at least one of the tool carriers (74, 76, 134, 136, 264, 266, 314, 316) is designed as a tool turret (78, 82).

42. Lathe as defined in claim 41, **characterized in that** the tool turret (78, 82) has a turret axis (80, 80') extending at an angle of less than 45° to the respective spindle axis (48, 98).

43. Lathe as defined in claim 42, **characterized in that** the turret axis (80') extends essentially parallel to the respective spindle axis (48, 98).

44. Lathe as defined in claim 42, **characterized in that** the turret axis (80) extends in an angular range of approximately 10° to approximately 30° in relation to the respective spindle axis (48, 98).

45. Lathe as defined in any one of the preceding claims, **characterized in that** one of the tool slides (110) bears an element carrier (150) for elements (152, 154, 156) usable on the workpiece (W).

46. Lathe as defined in claim 45, **characterized in that** the element carrier (150) bears a workpiece support element (152, 154) as element.

47. Lathe as defined in claim 46, **characterized in that** the workpiece support element is a receiving means (152, 154) for supporting the workpiece (W).

48. Lathe as defined in any one of claims 45 to 47, **characterized in that** the element carrier (150) bears a tool (156) as element.

49. Lathe as defined in any one of claims 45 to 48, **characterized in that** the elements (152, 154, 156) are located with their central axis in a plane (158).

50. Lathe as defined in claim 49, **characterized in that** the plane (158) extends parallel to the Y axis.

51. Lathe as defined in any one of the preceding claims, **characterized in that** at least one of the working spindles (44, 94) is displaceable in Z direction to such an extent in the direction of the other working spindle (44, 94) that the workpiece (W) is transferable from one workpiece receiving means (46, 96) to the other workpiece receiving means (96, 46).

52. Lathe as defined in any one of the preceding claims, **characterized in that** the guide means (100, 184) for the working spindle (44, 94) displaceable in Z direction are respectively arranged in the area of the support sections (40, 90).

53. Lathe as defined in claim 52, **characterized in that** the guide means (184, 100') are arranged outside a longitudinal section of the machine base member (16) having a working space (AR) located in it.

54. Lathe as defined in any one of the preceding claims, **characterized in that** a guiding device (210) for longitudinal turning is associated with one of the working spindles (94).

55. Lathe as defined in claim 54, **characterized in that** the working spindle (94) is movable in Z direction relative to the guiding device (210).

56. Lathe as defined in claim 54 or 55, **characterized in that** the working spindle (94) is guided on a Z guide means arranged on the spindle support side (28b) of the support section (90).

57. Lathe as defined in any one of claims 54 to 56, **characterized in that** the guiding device (210) is held stationarily on the support section (90).

58. Lathe as defined in any one of claims 54 to 57, **characterized in that** the oppositely located working spindle (44) is movable in Z direction relative to the support section (40).

59. Lathe as defined in claim 58, **characterized in that** the oppositely located working spindle (44) is displaceable in Z direction to such an extent that its workpiece receiving means (46) reaches the guiding device (210).

## Revendications

1. Tour, comprenant un bâti de machine (10) disposé sur une surface de support (14), lequel présente un corps de socle de machine (16) étiré en longueur dans une direction longitudinale (18), qui présente une première partie support (40) et une seconde partie support (90) disposée dans le sens longitudinal (18) en suivant la première partie, chacune des parties supports (40, 90) présentant un côté de base (24), un côté support de broche (28) et deux côtés supports de coulisseau (32, 34),
une première broche de travail (44) avec un premier logement de pièce (46), la première broche de travail étant disposée sur le bâti de machine (10), pouvant être entraînée de façon rotative autour d'un axe de broche (48) et disposée sur le côté support de broche (28a) de la première partie support (40),
au moins un premier coulisseau porte-outil (50, 220) disposé sur l'un des côtés supports de coulisseau (32a, 34a) de la première partie support (40), coulisseau avec lequel un porte-outil (74, 76) peut être déplacé dans une direction X transversalement au premier axe de broche (48), de sorte qu'une pièce maintenue dans le premier logement de pièce (46) peut être usinée avec au moins un outil maintenu sur le porte-outil (74, 76),
une seconde broche de travail (94) avec un second logement de pièce (96), qui est tourné vers le premier logement de pièce (46), la seconde broche de travail étant disposée sur le bâti de machine (10), pouvant tourner de façon rotative autour d'un second axe de broche (98) et disposée sur le côté support de broche (28b) de la seconde partie support (90),
au moins un second coulisseau d'outil (110, 270) disposé sur l'un des côtés supports de coulisseau (32b, 34b) de la seconde partie support (90), avec lequel un porte-outil (134, 136) peut être déplacé dans une direction X transversalement au second axe de broche (98), de sorte qu'une pièce (W) maintenue dans le second logement de pièce (96) peut être usinée avec au moins un outil maintenu sur le porte-outil (134, 136),
**caractérisé en ce que**, dans chacune des parties supports (40, 90), le côté support de broche (28) est disposé dans une première direction transversale (26) par rapport à la direction longitudinale (18) de façon opposée du côté de base (24) et les deux côtés supports d'outil (32, 34) sont situés dans une seconde direction transversale (30) par rapport à la direction longitudinale (18), agencée perpendiculairement à la première direction transversale (26), opposés entre eux entre le côté de base (24) et le côté support de broche (28).

2. Tour selon la revendication 1, **caractérisé en ce que** les parties supports (40, 90) présentent sensiblement la même section.

3. Tour selon la revendication 2, **caractérisé en ce que** le corps de socle de machine (16) s'étend à la façon d'une poutre dans le sens longitudinal (18).

4. Tour selon l'une quelconque des revendications précédentes, **caractérisé en ce qu'**une partie de liaison (180) est prévue entre les parties supports (40, 90).

5. Tour selon la revendication 4, **caractérisé en ce que** la partie de liaison (180) présente une forme de section s'écartant des parties supports (40, 90).

6. Tour selon l'une quelconque des revendications précédentes, **caractérisé en ce qu'**au moins l'une des parties supports (40, 90) présente sur son côté porte-broche (28a, 28b) des guides (100, 184) situés dans un plan de guidage de broche (ESP) pour une broche de travail (44, 94) pouvant être déplacée dans la direction Z parallèlement à l'axe de broche (48, 98) concerné.

7. Tour selon la revendication 6, **caractérisé en ce que** les guides (100, 184) sont disposés dans un plan de guidage de broche (ESP) agencé parallèlement à la direction longitudinale (18).

8. Tour selon l'une quelconque des revendications précédentes, **caractérisé en ce qu'**au moins l'un des coulisseaux porte-outil (50, 110, 220, 270) est guidé de façon mobile avec des guides de coulisseau (60, 62, 230, 282) situés dans un plan de guidage de coulisseau (ES) sur le corps du socle de machine (16).

9. Tour selon la revendication 8, **caractérisé en ce que** les guides de coulisseau (60, 62, 230, 282) s'étendent dans des plans de guidage de coulisseau (ES) agencés parallèlement à la direction longitudinale (18).

10. Tour selon l'une quelconque des revendications précédentes, **caractérisé en ce que** les côtés porte-coulisseau (32, 34) du corps de socle de machine (16) sont situés sur le même côté du plan de guidage de broche (ESP).

11. Tour selon l'une quelconque des revendications 6 à 10, **caractérisé en ce que** le plan de guidage de coulisseau (ES) est agencé transversalement au plan de guidage de broche (ESP).

12. Tour selon, la revendication 11, **caractérisé en ce que** les plans de guidage de coulisseau (ES) se faisant face sont agencés transversalement au plan de guidage de broche (ESP).

13. Tour selon la revendication 12, **caractérisé en ce que** les plans de guidage de coulisseau (ES) sont agencés à peu près perpendiculairement au plan de guidage de broche (ESP).

14. Tour selon l'une quelconque des revendications précédentes, **caractérisé en ce que**, pour l'usinage de la pièce (W) concernée, le coulisseau porte-outil (50, 52, 110, 112, 220, 222, 270, 272) correspondant et la broche de travail (44, 94) correspondante sont disposés sur le même côté de l'outil (84) se trouvant dans la position de travail (A) par rapport à cette pièce (W).

15. Tour selon l'une quelconque des revendications précédentes, **caractérisé en ce que** tous les coulisseaux porte-outil (50, 52, 110, 112, 220, 222, 270, 272) pouvant être utilisés pour l'usinage de la pièce (W) maintenue dans l'un des logements de pièce (46, 96) sont disposés, vus dans le sens de la longueur (18) du corps de socle de machine (16), essentiellement sur le même côté des outils (84), ces derniers pouvant être amenés dans la position de travail (A) et portés par ces coulisseaux.

16. Tour selon l'une quelconque des revendications précédentes, **caractérisé en ce que** les coulisseaux porte-outil (50, 52, 110, 112, 220, 222, 270, 272) attribués à la partie support (40, 90) respective, sont disposés sur un côté opposé à l'autre partie support (90, 40) respective des outils (84) portés par ces coulisseaux.

17. Tour selon l'une quelconque des revendications précédentes, **caractérisé en ce que** deux coulisseaux porte-outil (50, 52, 110, 112, 220, 222, 270, 272) sont attribués à au moins une partie support (40, 90).

18. Tour selon l'une quelconque des revendications précédentes, **caractérisé en ce que**, les coulisseaux porte-outil (50, 52, 110, 112, 220, 222, 270, 272) sont réalisés sur au moins l'une des parties supports (40, 90) de façon symétrique par rapport à un plan (ES).

19. Tour selon l'une quelconque des revendications précédentes, **caractérisé en ce qu'**un coulisseau porte-outil (50, 52, 220, 222) d'une partie support (40) est réalisé de façon identique avec un coulisseau porte-outil (110, 112, 270, 272) de l'autre partie support (90).

20. Tour selon la revendication 19, **caractérisé en ce que** les coulisseaux porte-outil (50, 112, 52, 110, 220, 272, 222, 270,) réalisés de façon identique entre eux, sont disposés sur différents cotés supports de coulisseau (32, 34) du corps de socle de machine (16).

21. Tour selon l'une quelconque des revendications 17 à 20, **caractérisé en ce qu'**au moins l'un des deux coulisseaux porte-outil (50, 52, 110, 112, 220, 222, 270, 272) attribués à l'une des broches de travail (44, 94) présente un corps de coulisseau (54, 56, 114, 116, 244, 296) pouvant être déplacé dans la direction Z.

22. Tour selon l'une quelconque des revendications précédentes, **caractérisé en ce que** sur les côtés supports de coulisseau (32, 34) sont prévus les guides de coulisseau (60, 62, 230, 282) pour le au moins coulisseau porte-outil (50, 52, 110, 112, 220, 222, 270, 272) respectivement dans la zone des parties supports (40, 90).

23. Tour selon la revendication 22, **caractérisé en ce que** les guides de coulisseau (230, 282) sont disposés à l'extérieur d'une partie longitudinale du corps de socle de machine (16), dans laquelle est situé un espace de travail (AR).

24. Tour selon l'une quelconque des revendications précédentes, **caractérisé en ce que** les coulisseaux porte-outil (50, 52, 110, 112) sont guidés de façon mobile sur les côtés supports de coulisseau (32, 34) du corps de socle de machine (16) dans la direction Z.

25. Tour selon l'une quelconque des revendications précédentes, **caractérisé en ce que** sur au moins un côté support de coulisseau (32, 34) sont prévus des guides Z (60, 62) pour le guidage mobile du coulisseau porte-outil (50, 52, 110, 112) respectif.

26. Tour selon la revendication 25, **caractérisé en ce que** les guides Z (60, 62) du côté support de coulisseau (32, 34) d'une partie support (40) sont alignés avec des guides Z (60, 62).du même côté support de coulisseau (32, 34) de l'autre partie support (90).

27. Tour selon la revendication 26, **caractérisé en ce que** les guides Z (60, 62) des côtés supports de coulisseau (32, 34) des deux parties supports (40, 90) sont imbriqués l'un dans l'autre.

28. Tour selon la revendication 27, **caractérisé en ce que** les guides Z (60, 62) s'étendent au-delà de la partie de liaison (180).

29. Tour selon l'une quelconque des revendications 1 à 24, **caractérisé en ce qu'**au moins l'un des coulisseaux porte-outil (50, 52, 110, 112, 220, 222, 270, 272) comprend un corps de coulisseau pour Y (224, 276), qui est guidé de façon mobile sur le côté support de coulisseau (32, 34) du corps de socle de machine (16) dans la direction Y.

30. Tour selon l'une quelconque des revendications précédentes, **caractérisé en ce que** sur au moins un côté support de coulisseau (32, 34) sont prévus des guides pour Y (230, 282) pour le guidage mobile du coulisseau porte-outil (220, 222, 270, 272) respectif.

31. Tour selon la revendication 29 ou 30, **caractérisé en ce que** au moins l'un des coulisseaux porte-outil (220, 222, 270, 272) comprend un corps de coulisseau pour Z (244, 296), qui peut être déplacé dans la direction Z par rapport au corps de coulisseau pour Y (224, 276) guidé sur le côté support de coulisseau (32, 34).

32. Tour selon l'une quelconque des revendications précédentes, **caractérisé en ce que** chaque coulisseau porte-outil (50, 52, 110, 112, 220, 222, 270, 272) comprend un corps de coulisseau pour X (70, 72, 130, 132, 254, 306), qui est guidé de façon mobile dans la direction X par rapport à un corps de coulisseau (54, 56, 114, 116, 224, 276) guidé sur le côté support de coulisseau (32, 34).

33. Tour selon l'une quelconque des revendications précédentes, **caractérisé en ce que**, pour l'usinage de la pièce (W) respective, le porte-outil (74, 76, 134, 136, 264, 266, 314, 316) correspondant et le logement de pièce (76, 96) correspondant sont disposés, vus dans le sens longitudinal (18) du corps de socle de machine (16) essentiellement sur le même côté de l'outil (84) placé dans la position de travail (A) respectivement par rapport à cette pièce (W).

34. Tour selon l'une quelconque des revendications précédentes, **caractérisé en ce que** tous les porte-outil (74, 76, 134, 136, 264, 266, 314, 316) pouvant être utilisés pour l'usinage de la pièce (W) maintenue dans l'un des logements de pièce (46, 96) sont disposés, vus dans le sens longitudinal (18) du corps de socle de machine (16), essentiellement sur le même côté des outils (84) pouvant être amenés dans la position de travail (A).

35. Tour selon l'une quelconque des revendications précédentes, **caractérisé en ce que** les porte-outil (74, 76, 134, 136, 264, 266, 314, 316) attribués à la partie support (40, 90) respective s'étendent essentiellement en direction d'un côté, opposé à l'autre partie support (90, 40) respective, des outils (84) portés respectivement par ces supports.

36. Tour selon l'une quelconque des revendications précédentes, **caractérisé en ce qu'**au moins deux porte-outil (74, 76, 264, 266 ; 134, 136, 314, 316) sont attribués à au moins l'une des broches de travail (44, 94).

37. Tour selon la revendication 36, **caractérisé en ce que** les porte-outil (74, 76, 264, 266 ; 134, 136, 314, 316) sont réalisés sur au moins l'une des parties supports (40, 90) de façon symétrique par rapport à un plan (ES).

38. Tour selon l'une quelconque des revendications précédentes, **caractérisé en ce qu'**un porte-outil (74, 76, 264, 266) d'une partie support (40) est réalisé de façon identique au porte-outil (136, 134, 316, 314) de l'autre partie support (90).

39. Tour selon la revendication 38, **caractérisé en ce que** les porte-outil (74, 136; 76, 134 ; 264, 316 ; 266, 314) réalisés de façon identique entre eux sont disposés sur différents côtés supports de coulisseau (32, 34) du corps de socle de machine (16).

40. Tour selon l'une quelconque des revendications précédentes, **caractérisé en ce que** les porte-outil (74, 76, 134, 136, 264, 266, 314, 316) sont réalisés comme des porte-outil multiples.

41. Tour selon la revendication 40, **caractérisé en ce qu'**au moins l'un des porte-outil (74, 76, 134, 136, 264, 266, 314, 316) est réalisé comme une tourelle à outils (78, 82).

42. Tour selon la revendication 41, **caractérisé en ce que** la tourelle à outils (78, 82) présente un axe de tourelle (80, 80') agencé dans un angle de moins de 45° par rapport à l'axe de broche (48, 98) respectif.

43. Tour selon la revendication 42, **caractérisé en ce que** l'axe de tourelle (80') est agencé sensiblement parallèlement à l'axe de broche (48, 98) respectif.

44. Tour selon la revendication 42, **caractérisé en ce que** l'axe de tourelle (80) est agencé dans une plage angulaire d'environ 10° jusqu'à environ 30° par rapport à l'axe de broche (48, 98) respectif.

45. Tour selon l'une quelconque des revendications précédentes, **caractérisé en ce que** l'un des coulisseaux porte-outil (110) porte un support d'éléments (150) pour des éléments (152, 154, 156) pouvant être utilisés sur la pièce (W).

46. Tour selon la revendication 45, **caractérisé en ce que** le support d'éléments (150) porte un élément de soutien de pièce (152, 154) en tant qu'élément.

47. Tour selon la revendication 46, **caractérisé en ce que** l'élément de soutien de pièce est un logement (152, 154) pour le soutien de la pièce (W).

48. Tour selon l'une quelconque des revendications 45 à 47, **caractérisé en ce que** le support d'éléments (150) porte un outil (156) en tant qu'élément.

49. Tour selon l'une quelconque des revendications 45 à 48, **caractérisé en ce que** les éléments (152, 154, 156) sont disposés avec leur axe médian dans un plan (158).

50. Tour selon la revendication 49, **caractérisé en ce que** le plan (158) est parallèle à l'axe Y.

51. Tour selon l'une quelconque des revendications précédentes, **caractérisé en ce qu'**au moins l'une des broches de travail (44, 94) peut coulisser dans la direction Z en direction de l'autre broche de travail (44, 94) suffisamment pour qu'un transfert de la pièce (W) d'un logement de pièce (46, 96) à un autre logement de pièce (96, 46) puisse être effectué.

52. Tour selon l'une quelconque des revendications précédentes, **caractérisé en ce que** les guides (100, 184) pour la broche de travail (44, 94) pouvant coulisser dans la direction Z sont disposés chacun dans la zone des parties supports (40, 90).

53. Tour selon la revendication 52, **caractérisé en ce que** les guides (184, 100') sont disposés à l'extérieur d'une partie longitudinale du corps de socle de machine (16), dans laquelle est situé un espace de travail (AR).

54. Tour selon l'une quelconque des revendications précédentes, **caractérisé en ce qu'**un dispositif de guidage (210) pour le tournage longitudinal est attribué à l'une des broches de travail (94).

55. Tour selon la revendication 54, **caractérisé en ce que** la broche de travail (94) peut être déplacée dans la direction Z par rapport au dispositif de guidage (210).

56. Tour selon la revendication 54 ou 55, **caractérisé en ce que** la broche de travail (94) est guidée sur le guide Z disposé sur le côté support de broche (28b) de la partie support (90).

57. Tour selon l'une quelconque des revendications 54 à 56, **caractérisé en ce que** le dispositif de guidage (210) est maintenu de façon fixe sur la partie support (90).

58. Tour selon l'une quelconque des revendications 54 à 57, **caractérisé en ce que** la broche de travail (44) opposée peut être déplacée dans la direction Z par rapport à la partie support (40).

59. Tour selon la revendication 58, **caractérisé en ce que** la broche de travail (44) opposée peut coulisser dans la direction Z suffisamment pour que son logement de pièce (46) atteigne le dispositif de guidage (210).
